(19) **Europäisches Patentamt / European Patent Office / Office européen des brevets**

(11) **EP 4 057 751 B1**

(12) **EUROPEAN PATENT SPECIFICATION**

(45) Date of publication and mention
of the grant of the patent:
**21.05.2025 Bulletin 2025/21**

(21) Application number: **20899755.1**

(22) Date of filing: **05.11.2020**

(51) International Patent Classification (IPC):
***H04W 72/12*** *(2023.01)*      ***G06N 3/04*** *(2023.01)*
***G06N 3/08*** *(2023.01)*

(52) Cooperative Patent Classification (CPC):
**H04W 72/52; G06N 3/045; G06N 3/092**

(86) International application number:
**PCT/CN2020/126756**

(87) International publication number:
**WO 2021/114968 (17.06.2021 Gazette 2021/24)**

(54) **SCHEDULING METHOD AND APPARATUS**

TERMINPLANUNGSVERFAHREN UND -VORRICHTUNG

PROCÉDÉ ET APPAREIL DE PLANIFICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2019 CN 201911285268**

(43) Date of publication of application:
**14.09.2022 Bulletin 2022/37**

(73) Proprietor: **Huawei Technologies Co., Ltd.
Shenzhen, Guangdong 518129 (CN)**

(72) Inventors:
• **XU, Chen
  Shenzhen, Guangdong 518129 (CN)**
• **WANG, Jian
  Shenzhen, Guangdong 518129 (CN)**
• **HUANGFU, Yourui
  Shenzhen, Guangdong 518129 (CN)**
• **LI, Rong
  Shenzhen, Guangdong 518129 (CN)**
• **WANG, Jun
  Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(56) References cited:
EP-A1- 4 054 148       WO-A1-2021/103947
CN-A- 109 005 060      CN-A- 109 982 434
CN-A- 109 996 247      CN-A- 110 096 526
US-A1- 2016 321 537

• WEI CUI ET AL: "Spatial Deep Learning for
Wireless Scheduling", ARXIV.ORG, CORNELL
UNIVERSITY LIBRARY, 201 OLIN LIBRARY
CORNELL UNIVERSITY ITHACA, NY 14853, 4
August 2018 (2018-08-04), XP080998702
• YAOHUA SUN ET AL: "Application of Machine
Learning in Wireless Networks: Key Techniques
and Open Issues", ARXIV.ORG, CORNELL
UNIVERSITY LIBRARY, 201 OLIN LIBRARY
CORNELL UNIVERSITY ITHACA, NY 14853, 24
September 2018 (2018-09-24), XP081194458

## Description

## TECHNICAL FIELD

This application relates to the field of communication technologies, and in particular, to a scheduling method and apparatus.

## BACKGROUND

Radio resource scheduling plays a crucial role in a cellular network, and is essentially to allocate resources such as available radio spectrums based on current channel quality, a quality of service (quality of service, QoS) requirement, and the like of each user equipment. In the cellular network, media access control (media access control, MAC) layer scheduling is mainly used to resolve a problem such as time-frequency resource allocation, modulation and coding scheme (modulation and coding scheme, MCS) selection, user pairing, and precoding, and implement a compromise between a throughput and fairness of a system through scheduling.

Currently, to perform scheduling in a wireless transmission environment that dynamically changes, a good scheduling policy is generally obtained based on a deep reinforcement learning (deep reinforcement learning, DRL) algorithm. In the foregoing scheduling algorithm, a deep neural network is generally used for implementation. An input neuron size and an output neuron size of the deep neural network depend on a state and an action space of a system, and the state and the action space of the system are related to a quantity of to-be-scheduled user equipments in the system. Therefore, the deep neural network changes with the quantity of to-be-scheduled user equipments. Such a system is for example disclosed in document CN 109 982 434 A.

Because the quantity of to-be-scheduled user equipments is uncontrollable, a size of a deep neural network that is suitable for the quantity of user equipments cannot be ensured. Consequently, a performance loss and poor scheduling flexibility may be caused.

## SUMMARY

This application provides a scheduling method and apparatus, to decouple a deep neural network from a quantity of user equipments in terms of scheduling, to resolve a problem that it is difficult for a deep reinforcement learning scheduling algorithm to self-adapt to the quantity of user equipments.

According to a first aspect, this application provides a scheduling method, where the method may be applied to a network device, or may be applied to a chip or a chipset in the network device. The method includes: obtaining a fifth state information set based on fourth state information sets of K to-be-scheduled terminal devices and a state information set of a system; inputting the fifth state information set into a third neural network model to determine a weight set; determining a scheduled weight of each to-be-scheduled terminal device in the K to-be-scheduled terminal devices based on the weight set, to obtain K scheduled weights; and determining a scheduling result based on the K scheduled weights, where the scheduling result indicates a scheduled terminal device. K is an integer greater than or equal to 1, a dimension of a fourth state information set of any to-be-scheduled terminal device in the K to-be-scheduled terminal devices is L, L is an integer greater than or equal to 1, a fourth state information set of any to-be-scheduled terminal device includes state information of the any to-be-scheduled terminal device and state association data between the any to-be-scheduled terminal device and another to-be-scheduled terminal device, a quantity of weights included in the weight set is the same as L, and the third neural network model is determined based on L.

In the foregoing method, a state information set obtained based on state information sets of all to-be-scheduled terminal devices and the state information set of the system is input into a neural network model, to obtain a result. In other words, in a scheduling process, the neural network model is shared among all the to-be-scheduled terminal devices, and the neural network model may be applied to all the to-be-scheduled terminal devices. Therefore, the neural network model may be decoupled from a quantity of to-be-scheduled terminal devices during scheduling, so that the neural network model can be applied to scenarios in which quantities of to-be-scheduled terminal devices are different, and has good self-adaptability and scalability.

In a possible design, the state information set of the system includes at least one piece of the following state information: an average throughput of the system, fairness of the system, and a packet loss rate of the system.

In a possible design, a specific method for obtaining the fifth state information set based on the fourth state information sets of the K to-be-scheduled terminal devices and the state information set of the system may be as follows: processing the fourth state information sets of the K to-be-scheduled terminal devices to obtain a sixth state information set, and combining the sixth state information set and the state information set of the system into the fifth state information set.

In the foregoing method, the fifth state information set may be accurately obtained, so that the scheduling process can be decoupled from the quantity of to-be-scheduled terminal devices, to implement scheduling that is not related to the quantity of to-be-scheduled terminal devices.

In a possible design, a specific method for processing the fourth state information sets of the K to-be-scheduled terminal devices to obtain the sixth state information set may be as follows: averaging each piece of state information in the fourth state information sets of the K to-be-scheduled terminal devices to obtain the sixth state information set; or selecting a maximum value of each piece of state information in the fourth state information sets of the K to-be-scheduled terminal devices to form the sixth state information set; or selecting a minimum value of each piece of state information in the fourth state information sets of the K to-be-scheduled terminal devices to form the sixth state information set.

In the foregoing method, the sixth state information set may be flexibly obtained, so that the fifth state information set can be accurately obtained subsequently.

In a possible design, a seventh state information set is input into a fourth neural network model to obtain a value corresponding to the seventh state information set, where the value is used to update model parameters of the third neural network model and the fourth neural network model, a dimension of the seventh state information set is the same as a dimension of the fifth state information set, and the fourth neural network model is determined based on L.

In the foregoing method, the model parameters of the third neural network model and the fourth neural network model may be continuously trained and updated, so that the third neural network model and the fourth neural network model can be more accurate, and scheduling is more accurate. In addition, a training process is not affected by the quantity of to-be-scheduled terminal devices, so that the updated model parameter of the third neural network model and the updated model parameter of the fourth neural network are not related to the quantity of to-be-scheduled terminal devices, and the first neural network model and the second neural network model are applied to a wider range of scenarios.

In a possible design, the seventh state information set is the same as the fifth state information set.

In a possible design, that either of the third neural network model and the fourth neural network model is determined based on L may include: an input dimension of either of the third neural network model and the fourth neural network model is related to L. In this way, any neural network model may be applied to all the to-be-scheduled terminal devices. Therefore, the neural network model may be decoupled from the quantity of to-be-scheduled terminal devices during scheduling, so that the neural network model can be applied to scenarios in which quantities of to-be-scheduled terminal devices are different, and has good self-adaptability and scalability.

In a possible design, a specific method for determining the scheduled weight of each to-be-scheduled terminal device in the K to-be-scheduled terminal devices based on the weight set may be as follows: performing weighted summation on values of all pieces of state information in a fourth state information set of each to-be-scheduled terminal device in the K to-be-scheduled terminal devices based on the weight set, to obtain the scheduled weight of each to-be-scheduled terminal device.

In the foregoing method, a weight in the weight set may represent a weight of each piece of state information, so that the scheduled weight of each to-be-scheduled terminal device can be accurately determined based on the weight of each piece of state information, to accurately determine the scheduling result.

In a possible design, a specific method for determining the scheduling result based on the K scheduled weights may be as follows: using, as the scheduling result, an identifier of a terminal device corresponding to a largest scheduled weight in the K scheduled weights; or using, as the scheduling result, an identifier of a terminal device corresponding to a smallest scheduled weight in the K scheduled weights; or processing one scheduled weight in the K scheduled weights into a first value, processing the remaining K-1 scheduled weights into second values, and using, as the scheduling result, a sequence including the first value and the K-1 second values that are obtained through processing, where a terminal device corresponding to the first value in the scheduling result is the scheduled terminal device.

In the foregoing three methods, the scheduling result may be flexibly determined, to accurately indicate the scheduled terminal device.

According to a second aspect, an embodiment of this application provides a scheduling apparatus, where the scheduling apparatus includes a processor and a memory. The memory is configured to store a computer execution computer program or instructions. The processor is configured to execute the computer execution computer program or the instructions stored in the memory, so that the communication apparatus performs the corresponding method shown in the first aspect.

According to a third aspect, an embodiment of this application provides a computer-readable storage medium, where the computer-readable storage medium stores program instructions, and when the program instructions are run on a network device, the network device performs any one of the first aspect or the possible designs of the first aspect of embodiments of this application. For example, the computer-readable storage medium may be any usable medium accessible to a computer. The following provides an example but imposes no limitation: The computer-readable medium may include a non-transitory computer-readable storage medium, a random access memory (random-access memory, RAM), a read-only memory (read-only memory, ROM), an electrically erasable programmable read-only memory (electrically EPROM, EEPROM), a CD-ROM or another compact disc storage, a magnetic disk storage medium or another magnetic storage device, or any other medium that can be used to carry or store expected program code in a form of an instruction or a data structure and that can be accessed by a computer.

**BRIEF DESCRIPTION OF DRAWINGS**

FIG. 1 is a schematic diagram of a fully-connected neural network according to this application;

FIG. 2 is an architectural diagram of a communication system according to this application;

FIG. 3 is a block diagram of a scheduling method (not encompassed by the claims);

FIG. 4 is a flowchart of a scheduling method (not encompassed by the claims);

FIG. 5 is a block diagram of another scheduling method (not encompassed by the claims);

FIG. 6 is a flowchart of another scheduling method according to this application;

FIG. 7 is a block diagram of another scheduling method according to this application;

FIG. 8 is a performance analysis diagram according to this application;

FIG. 9 is another performance analysis diagram according to this application;

FIG. 10 is another performance analysis diagram according to this application;

FIG. 11 is another performance analysis diagram according to this application;

FIG. 12 is a schematic diagram of a structure of a scheduling apparatus according to this application;

FIG. 13 is a diagram of a structure of a scheduling apparatus according to this application; and

FIG. 14 is a schematic diagram of a structure of a network device according to this application.

## DESCRIPTION OF EMBODIMENTS

The following further describes in detail this application with reference to the accompanying drawings.

This application provides a scheduling method and apparatus, to decouple a deep neural network from a quantity of user equipments in terms of scheduling, to resolve a problem that it is difficult for a deep reinforcement learning scheduling algorithm to self-adapt to the quantity of user equipments. The method and the apparatus described in this application are based on a same inventive concept. Because problem resolving principles of the method and the apparatus are similar, mutual reference may be made to implementations of the apparatus and the method. Repeated parts are not described again.

In the following, some terms in this application are described, to help a person skilled in the art have a better understanding.

(1) Reinforcement learning is that an agent (Agent) performs learning by interacting with an environment. The agent performs an action in the environment based on a state fed back by environment, to obtain a reward (reward) and a state at a next moment. A goal is to enable the agent to obtain a maximum reward in a period of time through accumulation. In reinforcement learning, a reinforcement signal provided by the environment is used to make an evaluation (which is generally a scalar signal) of an impact caused by a generated action. In this way, the agent obtains knowledge in an action-evaluation environment, and improves an action solution to adapt to the environment. Common reinforcement learning algorithms include Q-learning (Q-learning), policy gradient (policy gradient) algorithm, an actor-critic (actor-critic) method, and the like. Currently, a commonly used reinforcement learning algorithm is generally deep reinforcement learning. Deep reinforcement learning mainly combines reinforcement learning with deep learning, uses a neural network to model a policy/value function adapt to a larger input/output dimension, and is referred to as deep reinforcement learning (DRL).

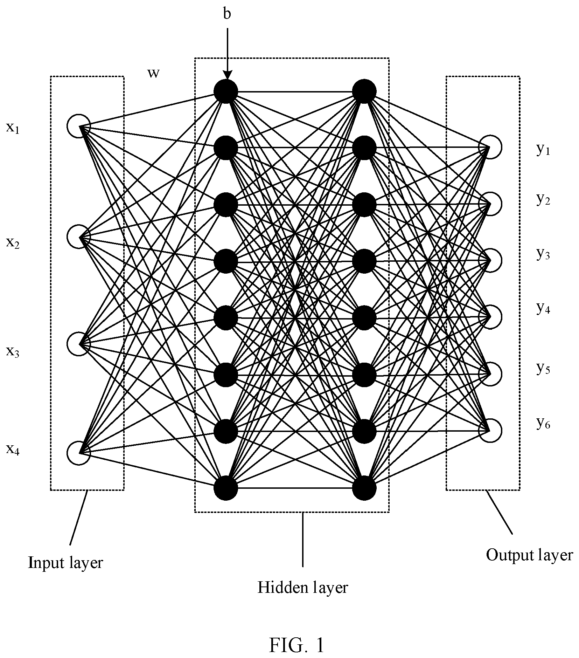

(2) A fully-connected neural network is also referred to as a multilayer perceptron (multi-layer perceptron, MLP). One MLP includes one input layer (left), one output layer (right), and a plurality of hidden layers (middle). Each layer includes several nodes that are referred to as neurons. Neurons of two adjacent layers are connected to each other. For example, FIG. 1 shows an example of a fully-connected neural network. In FIG. 1, an example in which two hidden layers are included is used, where x is an input, y is an output, w is a weight matrix, and b is a bias vector.

(3) MAC layer scheduling: MAC layer scheduling is mainly used to resolve a problem such as time-frequency resource allocation, MCS selection, user pairing, and precoding, and implement a compromise between a throughput and fairness of a system through MAC scheduling.

(4) In the descriptions of this application, terms such as "first" and "second" are merely used for distinction and description, and shall not be understood as an indication or implication of relative importance or an indication or implication of an order.

(5) At least one item (piece) means one or more items (pieces), and a plurality of items (pieces) mean two or more items (pieces).

(6) The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects.

It should be noted that, with continuous development of technologies, the terms in embodiments of this application may change, but all of them shall fall within the protection scope of this application.

To describe the technical solutions in embodiments of this application more clearly, the following describes the communication method and the apparatus according to embodiments of this application in detail with reference to accompanying drawings.

The scheduling method provided in embodiments of this application may be applied to various communication systems, for example, a satellite communication system, an Internet of things (internet of things, IoT), a narrowband Internet of things (narrowband internet of things, NB-IoT) system, a global system for mobile communications (global system for mobile communications, GSM), an enhanced data rates for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, a long term evolution (long term evolution, LTE) system, three main application scenarios in a fifth generation (5G) communication system such as 5G new radio (new radio, NR) and a next-generation 5G mobile communication system, namely, enhanced mobile broadband (enhanced mobile broadband, eMBB), ultra-reliable and low latency communications (ultra reliable low latency communications, uRLLC), and massive machine type communication (massive machine type communications, mMTC), or another communication system. The scheduling method provided in embodiments of this application may be used, provided that a communication device in the communication system performs MAC layer scheduling.

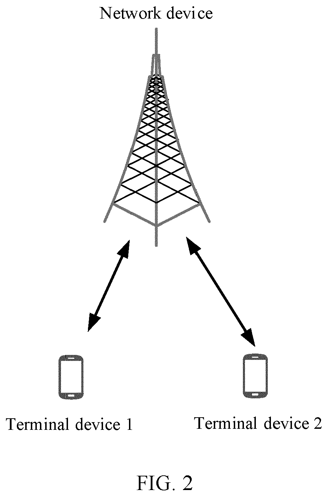

For example, FIG. 2 shows an architecture of a possible communication system to which a scheduling method is applicable according to an embodiment of this application. The architecture of the communication system includes a network device and a terminal device (for example, a terminal device 1 and a terminal device 2 shown in FIG. 2).

The terminal device is also referred to as a mobile station (mobile station, MS), a user equipment (user equipment, UE), or a terminal (terminal). For example, the terminal device may include various handheld devices, vehicle-mounted devices, wearable devices, and computing devices that have a wireless communication function, another processing device connected to a wireless modem, or the like. Alternatively, the terminal device may be a subscriber unit (subscriber unit), a cellular phone (cellular phone), a smartphone (smartphone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like.

The network device may be a device deployed in a radio access network for providing a wireless communication function for the terminal device. Specifically, the network device may be a base station (base station, BS). For example, the base station may include macro base stations, micro base stations (also referred to as small cells), relay nodes, access points, and the like in various forms. In systems that use different radio access technologies, devices that have a base station function may have different names. For example, the base station is referred to as an evolved NodeB (evolved NodeB, eNB or eNodeB) in an LTE system, is referred to as a NodeB (nodeB) in a 3rd generation (3rd generation, 3G) system, or may be a gNodeB (gNB), a new radio controller (new radio controller, NR controller), or the like in a 5G system. For ease of description, in all embodiments of this application, the foregoing devices or apparatuses that provide a wireless communication function for the terminal device are collectively referred to as network devices.

In the communication system, the network device (such as a base station) may perform MAC layer resource scheduling. The communication system generally includes cells, each cell includes a base station, and the base station provides a communication service for at least one terminal device. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack. This is not limited in this application.

It should be noted that a quantity of network devices and a quantity of terminal devices in FIG. 1 impose no limitation on the communication system, and the communication system may include more network devices and may include fewer or more terminal devices. It should be understood that, in addition to the network device and the terminal device, the communication system may further include other devices that are not listed one by one herein in this application.

It should be understood that the architecture of the communication system and a service scenario described in embodiments of this application are intended to describe the technical solutions in embodiments of this application more clearly, but are not intended to limit the technical solutions provided in embodiments of this application. A person of ordinary skill in the art may know that, as the communication system evolves and a new service scenario emerges, the technical solutions provided in embodiments of this application are also applicable to a similar technical problem.

Currently, to perform scheduling in a wireless transmission environment that dynamically changes, a DRL algorithm may be used. In the algorithm, an agent in the DRL continuously updates a parameter of the agent by interacting with the wireless transmission environment, to obtain a good decision policy. The agent first obtains a current state of the communication system, and makes a decision based on the state. After the decision is implemented, the communication system enters a next state, and feeds back a reward. The agent adjusts a decision parameter of the agent based on the reward. The agent iteratively interacts with the environment, continuously adjusts the parameter of the agent to obtain a larger reward, and may obtain a good scheduling policy after final convergence.

A policy of the agent is generally implemented by using a deep neural network. An input neuron size and an output neuron size of the deep neural network depend on a state and an action space of a system, and the state and the action space of the system are related to a quantity of to-be-scheduled terminal devices in the system. Therefore, the deep neural network changes with the quantity of to-be-scheduled terminal devices. To apply the deep neural network to an actual system, there are generally two methods: 1. A network suitable for a maximum quantity of terminal devices is trained. 2. A plurality of networks are trained, for switching, based on different user quantities.

However, in the existing method 1, when a quantity of terminal devices does not match, a performance loss is caused. In addition, because the state and the action space are very large, a size of a neural network corresponding to the state and the action space is also very large. In this case, training of the neural network is difficult, and convergence cannot be ensured. In the method 2, flexibility of traversing all terminal devices is poor, and large storage complexity is caused.

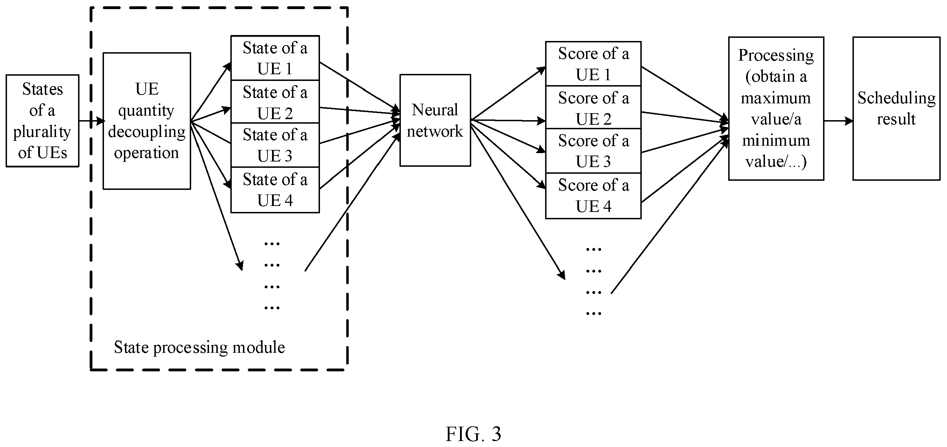

Based on the foregoing problem, this application provides a new scheduling method and apparatus, to decouple a deep neural network from a quantity of terminal devices in terms of scheduling, to resolve a problem that it is difficult for a deep reinforcement learning scheduling algorithm to self-adapt to the quantity of terminal devices. Specifically, the scheduling method provided in this application may be implemented based on DRL. Specifically, states (states) of a plurality of to-be-scheduled terminal devices (UE) may be first processed. Then, outputs separately corresponding to the plurality of to-be-scheduled terminal devices are obtained after a state (state) of a single terminal device is input into a same neural network model. After the obtained outputs are processed, a scheduling result is obtained. The states of the plurality of to-be-scheduled terminal devices may be processed by a newly added state processing module (unit). Certainly, a name of the state processing module is only an example, and there may be other different names. This is not limited in this application. For example, the obtained outputs separately corresponding to the plurality of to-be-scheduled terminal devices may be scores of the to-be-scheduled terminal devices or the like. This is not limited in this application. For example, the terminal device is a UE. FIG. 3 is a block diagram of a scheduling method.

It should be noted that the scheduling method provided in embodiments of this application may be applied to a network device, or may be applied to a chip or a chipset in the network device. An example in which the scheduling method is applied to the network device is used below to describe in detail the scheduling method provided in this application.

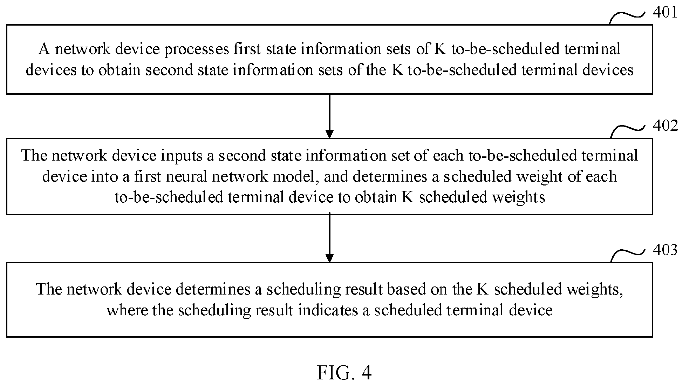

An embodiment of this application provides a scheduling method, applied to the communication system shown in FIG. 2. The scheduling method in this embodiment may be applied to an actor-critic algorithm (discrete actions) in reinforcement learning. Refer FIG. 4. A specific procedure of the method may include the following steps.

Step 401. A network device processes first state information sets of K to-be-scheduled terminal devices to obtain second state information sets of the K to-be-scheduled terminal devices, where K is an integer greater than or equal to 1, a second state information set of any to-be-scheduled terminal device includes state information of the any to-be-scheduled terminal device and state association data between the any to-be-scheduled terminal device and another to-be-scheduled terminal device, a dimension of a second state information set of any to-be-scheduled terminal device in the K to-be-scheduled terminal devices is H, and H is an integer greater than or equal to 1.

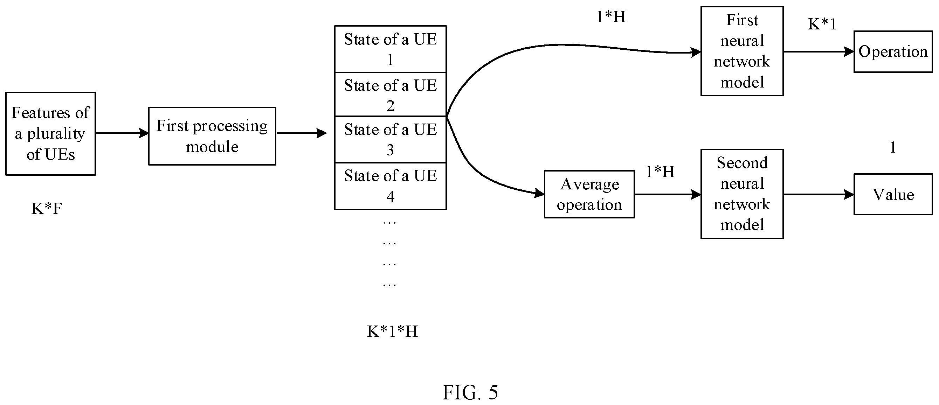

Specifically, the network device may perform step 401 by using a first processing module (which may be referred to as a state processing module). For example, when a dimension of a first state information set of each to-be-scheduled terminal device in the K to-be-scheduled terminal devices is F, state dimensions of all to-be-scheduled terminal devices may be considered as K*F, where F is an integer greater than or equal to 1. After the network device processes the first state information sets of the K to-be-scheduled terminal devices by using the first processing module, the state dimensions of all to-be-scheduled terminal devices become K*H that may be represented herein by using K*1*H. To be specific, an obtained state dimension (namely, a dimension of a second state information set) of each to-be-scheduled terminal device is H that may be represented herein by using 1*H, 2*(H/2), or the like. Optionally, the first state information set of each to-be-scheduled terminal device may be understood as a feature of the to-be-scheduled terminal device. For example, for the foregoing process, refer to a related block diagram that is in a block diagram of a scheduling method shown in FIG. 5 and in which the state processing module (the first processing module) processes features of UEs (namely, to-be-scheduled terminal devices) in K*F dimensions to obtain states of the K UEs in K*1*H dimensions.

In an optional implementation, H is greater than or equal to F, and H is set based on F. H is a quantity of pieces of state information included in each second state information set.

In an example implementation, the foregoing first processing module is configured to explicitly extract association between features (state information) of to-be-scheduled terminal devices as a part of a state information set of the to-be-scheduled terminal device. In addition, in a processing process, the state information of the to-be-scheduled terminal device is not lost. Therefore, it may be considered that a second state information set that is of the to-be-scheduled terminal device and that is obtained through processing includes state information of a user and an impact of another to-be-scheduled terminal device on the to-be-scheduled terminal device. To be specific, through the foregoing processing, a second state information set of any to-be-scheduled terminal device may include state information of the any to-be-scheduled terminal device and state association data between the any to-be-scheduled terminal device and another to-be-scheduled terminal device. It should be noted that the another to-be-scheduled terminal device herein may be some or all of to-be-scheduled terminal devices other than the any to-be-scheduled terminal device in the K to-be-scheduled terminal devices. This is not limited in this application.

For example, an operation performed by the first processing module may include embedding (embedding), inter-user normalization (inter-user normalization), an attention (attention) mechanism, and the like.

Embedding means mapping input user features (namely, the first state information sets of the K to-be-scheduled terminal devices) to another space by using a shared neural network, so that dimension transformation can be performed, for example, mapping from an F-dimensional space to an F'-dimensional space, where F' is H.

Inter-user normalization means performing normalization in each dimension of a user feature based on state information of all users (namely, the K to-be-scheduled terminal devices) in the dimension, for example, $x' = (x - x_{min})/(x_{max} - x_{min})$, $x' = (x - \mu)/\sigma$, $x' = x - \mu$, or $x = x/x_{max}$, where x is a value of a feature (state information), x' is a normalized feature value, $x_{max}$ is a maximum value (namely, a maximum value of the state information of the K to-be-scheduled terminal devices) of the features of all the users, $x_{min}$ is a minimum value (namely, a minimum value of the state information of the K to-be-scheduled terminal devices) of the features of all the users, $\mu$ is an average value (namely, an average value of the state information of the K to-be-scheduled terminal devices) of the features of all the users, and $\sigma$ is a standard deviation (namely, a standard deviation of the state information of the K to-be-scheduled terminal devices) of the features of all the users.

A main function of the attention mechanism is to extract correlation between user features (namely, state information of to-be-scheduled terminal devices). A principle thereof is to convert all user features into three matrices Q, M, and V by using three shared neural networks, dimensions are all M*dm, and an attention operation may be represented as

$$A(Q, M, V) = \text{softmax}\left(\frac{QM^T}{\sqrt{d_m}}\right)V$$

, where dm is H.

It may be learned from the related descriptions of the foregoing processing that the processing is essentially an operation that is independently performed on state information (feature) of each to-be-scheduled terminal device, and is not related to a quantity K of to-be-scheduled terminal devices.

In a specific implementation, a first state information set of any to-be-scheduled terminal device may include at least one piece of the following state information: an estimated instantaneous throughput of the terminal device, an average throughput of the terminal device, a buffer size of the terminal device, packet waiting time of the terminal device, and the like.

Step 402. The network device inputs a second state information set of each to-be-scheduled terminal device into a first neural network model, and determines a scheduled weight of each to-be-scheduled terminal device to obtain K scheduled weights, where the first neural network model is determined based on H.

A process in step 402 may be understood as a reasoning process. In the foregoing method, the first neural network model may only need to focus on a second state information set of a single to-be-scheduled terminal device to make a decision, so that the first neural network model is not related to the quantity K of to-be-scheduled terminal devices. For example, as shown in FIG. 5, the second state information sets of the K to-be-scheduled terminal devices are separately input into the first neural network model, that is, K second state information sets whose dimensions are 1*H are input into the first neural network model to obtain K*1 outputs, namely, the K scheduled weights.

The scheduled weight of each to-be-scheduled terminal device may be a probability that each to-be-scheduled terminal device is scheduled, a score, and the like.

In an optional implementation, that the first neural network model is determined based on H may be understood as follows: An input dimension of the first neural network model is related to H, that is, a quantity of neurons at an input layer of the first neural network model is related to H. In an implementation, in this application, the input dimension of the first neural network model is equal to H, that is, the quantity of neurons at the input layer of the first neural network model is H.

Specifically, the first neural network model is not related to K.

For example, the first neural network model may be referred to as a policy neural network. The first neural network model may be a fully-connected neural network, an activation function of a hidden layer of the first neural network model may be ReLU, and an activation function of an output layer thereof may be softmax.

Step 403. The network device determines a scheduling result based on the K scheduled weights, where the scheduling result indicates a scheduled terminal device.

For example, that the network device determines the scheduling result based on the K scheduled weights may be implemented by taking the following three actions (action). The following three actions are example actions in FIG. 5:

Action a1: The network device uses, as the scheduling result, an identifier of a terminal device corresponding to a largest scheduled weight in the K scheduled weights.

Action a1 may be implemented by using an operation argmax, and the obtained identifier of the terminal device may be a sequence number of the terminal device in the K to-be-scheduled terminal devices.

Action a2: The network device uses, as the scheduling result, an identifier of a terminal device corresponding to a smallest scheduled weight in the K scheduled weights.

Action a2 may be implemented by using an operation argmin, and the obtained identifier of the terminal device may also be a sequence number of the terminal device in the K to-be-scheduled terminal devices.

Action a3: The network device processes one scheduled weight in the K scheduled weights into a first value, processes the remaining K-1 scheduled weights into second values, and uses, as the scheduling result, a sequence including the first value and the K-1 second values that are obtained through processing, where a terminal device corresponding to the first value in the scheduling result is the scheduled terminal device.

For example, a scheduling result obtained in Action a3 may be one-hot code. For example, in the one-hot code, the first value is 0, and the second value is 1, namely, 111011...1; or the first value is 1, and the second value is 0, namely, 000100...0. Certainly, there may be many other representations that are not listed one by one in this application.

In an optional implementation, before the foregoing step is performed or in a process of performing the foregoing step, a neural network model is trained.

In a specific implementation, a third state information set is input into a second neural network model to obtain a value (refer to FIG. 5) corresponding to the third state information set. The value is used to update model parameters of the first neural network model and the second neural network model, a dimension of the third state information set is H, and the second neural network model is determined based on H.

The second neural network model may be referred to as a value neural network, a hidden layer of the second neural network model may be the same as the hidden layer of the first neural network model, and an activation function of an output layer of the second neural network model may be a linear activation function.

For example, that the second neural network model is determined based on H may be understood as follows: An input dimension of the second neural network model is related to H, that is, a quantity of neurons at an input layer of the second neural network model is related to H. In an implementation, in this application, the input dimension of the second neural network model is equal to H, that is, the quantity of neurons at the input layer of the second neural network model is H.

In a specific implementation, the value corresponding to the third state information set may be understood as value, and that the value is used to update the model parameters of the first neural network model and the second neural network model may be specifically as follows: updating the model parameters of the first neural network model and the second neural network model based on the value and a reward obtained from an environment.

In the foregoing method, a process of inputting the single third state information set into the second neural network model to obtain the value is not related to the quantity K of the to-be-scheduled terminal devices, and the second neural network model is not related to K either. Therefore, a training process of the neural network model is not related to K either. In this way, the training process may not be affected by the quantity of to-be-scheduled terminal devices, and training complexity is reduced.

In an optional implementation, there may be a plurality of cases in which the third state information set is obtained. For example, the third state information set is obtained by processing the second state information sets of the K to-be-scheduled terminal devices, for example, an average operation on the leftmost side of a dashed-line box in FIG. 5. For another example, the third state information set may be obtained by processing some second state information sets in the second state information sets of the K to-be-scheduled terminal devices. For another example, the third state information set may be obtained by processing the second state information sets of the K to-be-scheduled terminal devices and a state information set of a terminal device in another training sample. For another example, the third state information set may be obtained by processing a state information set of a terminal device in another training sample.

It should be noted that the data for obtaining the third state information set may be considered as a group of data. In the training process, the foregoing process may be executed a plurality of times, that is, a plurality of state information sets similar to the third state information set are obtained by using a plurality of groups of data, and a process of inputting a value into the second neural network model is repeatedly executed. Each group of data may be related to any quantity of terminal devices, that is, each group of data is decoupled from (not related to) a quantity of terminal devices.

In a specific implementation, that the network device processes the second state information sets of the K to-be-scheduled terminal devices to obtain the third state information set may include the following three methods:

Method b1: The network device averages each piece of state information in the second state information sets of the K to-be-scheduled terminal devices to obtain the third state information set. Method b1 may be understood as an average operation (average, avg.) (dimension reduction operation), and is shown in FIG. 5 only as an average operation.

Method b2: The network device selects a maximum value of each piece of state information in the second state information sets of the K to-be-scheduled terminal devices to form the third state information set. Method b2 may be understood as a maximum dimension reduction operation.

Method b3: The network device selects a minimum value of each piece of state information in the second state information sets of the K to-be-scheduled terminal devices to form the third state information set. Method b3 may be understood as a minimum dimension reduction operation.

It should be noted that, in addition to the foregoing three methods, there are other dimension reduction methods in which the network device may process the second state information sets of the K to-be-scheduled terminal devices to obtain the third state information set. The methods are not listed one by one herein.

The following uses an example to describe the foregoing scheduling method:

It is assumed that the quantity K of to-be-scheduled terminal devices is equal to 5, and the dimension F of the first state information set of each to-be-scheduled terminal device is equal to 4. State information included in each first state information set is {estimated instantaneous throughput, average throughput, buffer size, packet waiting time}. In this case, an input (namely, an input that needs to be processed by using the first processing module) of a system is a 5*4 matrix (referred to as a first state matrix below). Each row of the first state matrix is all features (namely, all pieces of state information in a first state information set of the to-be-scheduled terminal device) of one to-be-scheduled terminal device. After the first state matrix enters the first processing module, for example, an inter-user normalization operation is performed. Each column of the first state matrix is normalized by using the normalization method mentioned above, and a 5*1*4 second state matrix is output. For embedding or the attention mechanism, a process is similar, and a difference is that an output dimension becomes 5*1*F' and 5*1*dm, where F' and dm are preset parameters. In the second state matrix, each to-be-scheduled terminal device has a state vector whose dimension is 1*4, and the state vector of each to-be-scheduled terminal device is input into the first neural network model, for example, a fully-connected neural network that has two hidden layers and 128 neurons at the hidden layer. An activation function of the hidden layer is ReLU, and an output activation function of the neural network is softmax. Finally, an output dimension is 5*1 that respectively represents a probability that a to-be-scheduled terminal device is scheduled. For example, in a training phase, the second state matrix is averaged based on a first dimension, and the obtained average state whose dimension is 1*4 is input into the second neural network model to output a value. The hidden layer of the second neural network model is the same as that of the first neural network model. Finally, the activation function of the output layer is a linear activation function.

In the scheduling method provided in this embodiment of this application, state information of all to-be-scheduled terminal devices is processed, and then the processed state information of the to-be-scheduled terminal devices is separately input into a same neural network model, to obtain a result. In other words, in a scheduling process, the neural network model is shared among all the to-be-scheduled terminal devices, and the neural network model may be applied to all the to-be-scheduled terminal devices. Therefore, the neural network model may be decoupled from a quantity of to-be-scheduled terminal devices during scheduling, so that the neural network model can be applied to scenarios in which quantities of to-be-scheduled terminal devices are different, and has good self-adaptability and scalability.

It should be noted that, in the embodiment shown in FIG. 4, when K is equal to 1, that is, when there is only one to-be-scheduled terminal device, the another to-be-scheduled terminal device is the to-be-scheduled terminal device. In this case, the foregoing method may also be performed, and a difference is that a state information set of the to-be-scheduled terminal device is obtained, that is, a second state information set of the to-be-scheduled terminal device is the same as a first state information set of the to-be-scheduled terminal device. Further, the second state information set of the to-be-scheduled terminal device is directly input into the first neural network model, and one scheduled weight is finally obtained. In other words, the foregoing scheduling method is also fully applicable when K is equal to 1. In this way, the foregoing scheduling method is more independent of the quantity of to-be-scheduled terminal devices, and scheduling compatibility is better.

Certainly, in a specific implementation, a process of processing the state information set of the to-be-scheduled terminal device may be omitted, and when only one scheduled weight is output, a process of further determining a scheduling result based on the scheduled weight is omitted. This is not limited in this application.

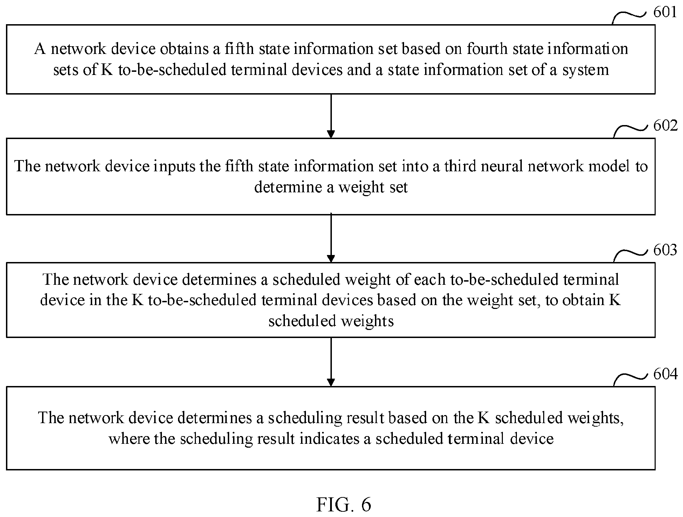

Based on the foregoing embodiment, an embodiment of this application further provides another scheduling method, applied to the communication system shown in FIG. 2. The scheduling method in this embodiment may be applied to an actor-critic algorithm (consecutive actions) in reinforcement learning. Refer to FIG. 6. A specific procedure of the method may include the following steps.

Step 601. A network device obtains a fifth state information set based on fourth state information sets of K to-be-scheduled terminal devices and a state information set of a system, where K is an integer greater than or equal to 1, a dimension of a fourth state information set of any to-be-scheduled terminal device in the K to-be-scheduled terminal devices is L, L is an integer greater than or equal to 1, and a fourth state information set of any to-be-scheduled terminal device includes state information of the any to-be-scheduled terminal device and state association data between the any to-be-scheduled terminal device and another to-be-scheduled terminal device.

The state information set of the system may include at least one piece of the following state information: an average throughput of the system, fairness of the system, and a packet loss rate of the system.

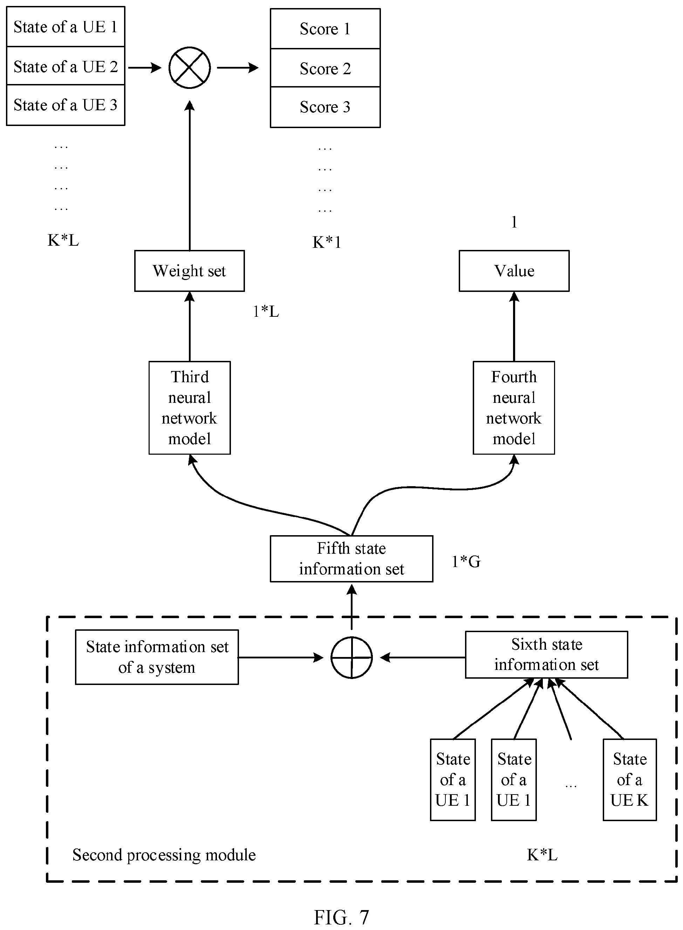

Specifically, the network device may perform step 601 by using a second processing module (which may be referred to as a state processing module). Specifically, a specific method in which the network device obtains the fifth state information set based on the fourth state information sets of the K to-be-scheduled terminal devices and the state information set of the system may be as follows: The network device processes the fourth state information sets of the K to-be-scheduled terminal devices to obtain a sixth state information set, and combines the sixth state information set and the state information set of the system into the fifth state information set. For example, state dimensions that are of all the to-be-scheduled terminal devices and that are formed by the fourth state information sets of the K to-be-scheduled terminal devices are K*L, to obtain a dimension 1*L of the sixth state information set. It is assumed that a dimension of the state information set of the system is J (which may be understood herein as 1*J), where J is an integer greater than or equal to 1. Then, a dimension that is of the fifth state information set and that is finally obtained through combination may be 1*G, where G is an integer greater than or equal to 2. G may be equal to J+L, that is, the foregoing set combination may be understood as adding two sets. For example, the foregoing process may be a process of the second processing module in a block diagram of a scheduling method shown in FIG. 7. In FIG. 7, the fourth information state set of each to-be-scheduled terminal device is shown as a UE state.

In an optional implementation, the fourth state information sets of the K to-be-scheduled terminal devices may be the same as the second state information sets of the K to-be-scheduled terminal devices in the embodiment shown in FIG. 4. In this case, L is equal to H. Correspondingly, the fourth state information sets of the K to-be-scheduled terminal devices may also be obtained by the network device by processing first state information sets of the K to-be-scheduled terminal devices. For a specific processing method, refer to the operation such as embedding (embedding), inter-user normalization (inter-user normalization), and an attention (attention) mechanism in the embodiment shown in FIG. 4. Details are not described herein again in this application.

In a specific implementation, a specific method in which the network device processes the fourth state information sets of the K to-be-scheduled terminal devices to obtain the sixth state information set may include the following three methods:

Method c1: The network device averages each piece of state information in the fourth state information sets of the K to-be-scheduled terminal devices to obtain the sixth state information set.

Method c2: The network device selects a maximum value of each piece of state information in the fourth state information sets of the K to-be-scheduled terminal devices to form the sixth state information set.

Method c3: The network device selects a minimum value of each piece of state information in the fourth state information sets of the K to-be-scheduled terminal devices to form the sixth state information set.

Optionally, when the fourth state information set is the same as the second state information set in the embodiment shown in FIG. 4, the obtained sixth state information set is the same as the third state information set obtained by the network device by processing the second state information sets of the K to-be-scheduled terminal devices in the embodiment shown in FIG. 4. Correspondingly, the foregoing Methods c1 to c3 are respectively similar to Methods b1 to b3 in FIG. 4. For details, refer to each other. Details are not described herein again.

Step 602. The network device inputs the fifth state information set into a third neural network model to determine a weight set, where the third neural network model is determined based on L, and a quantity of weights included in the weight set is the same as L.

A process in step 602 may be understood as a reasoning process. In the foregoing method, the third neural network model may only need to focus on one state information set (the fifth state information set herein) to output a corresponding result, so that the third neural network model is not related to a quantity K of to-be-scheduled terminal devices. For example, as shown in FIG. 7, when the dimension of the fifth state information set is 1*G, after the fifth state information set is input to the third neural network model, an obtained dimension of the weight set is 1*L, that is, the quantity of weights included in the weight set is L.

Specifically, the weight set may be considered as including a weight of each piece of state information in the fourth state information set of each to-be-scheduled terminal device in the K to-be-scheduled terminal devices. Alternatively, it may be understood that the L weights respectively represent weights of scores of L pieces of state information of each to-be-scheduled terminal device. Optionally, the L weights may be consecutive values.

In an example implementation, that the third neural network model is determined based on L may be understood as follows: An input dimension of the third neural network model is related to L, that is, a quantity of neurons at an input layer of the third neural network model is related to L.

In an implementation, in this application, the input dimension of the third neural network model is equal to G, that is, the quantity of neurons at the input layer of the first neural network model is G.

Specifically, the third neural network model is not related to K.

Step 603. The network device determines a scheduled weight of each to-be-scheduled terminal device in the K to-be-scheduled terminal devices based on the weight set, to obtain K scheduled weights.

In an implementation, a specific method in which the network device determines the scheduled weight of each to-be-scheduled terminal device in the K to-be-scheduled terminal devices based on the weight set may be as follows: The network device performs weighted summation on values of all pieces of state information in a fourth state information set of each to-be-scheduled terminal device in the K to-be-scheduled terminal devices based on the weight set, to obtain the scheduled weight of each to-be-scheduled terminal device. For example, the foregoing process may be understood as follows: A dot product operation is performed on a matrix (the weight set) whose dimension is 1*L and a matrix (the fourth state information sets of the K to-be-scheduled terminal devices) whose dimension is K*L, to obtain K*1 scheduled weights, namely, the K scheduled weights. For example, in a related process shown in FIG. 7, the K scheduled weights are shown as scores.

Certainly, the scheduled weight of each to-be-scheduled terminal device may be a probability that each to-be-scheduled terminal device is scheduled, and the like.

For example, the third neural network model may be referred to as a policy neural network. The third neural network model may be a fully-connected neural network. An activation function of a hidden layer of the third neural network model may be ReLU, and an output at an output layer thereof may be a multi-dimensional Gaussian distribution. For example, there may be two output layers that correspondingly output an average value and a variance, and corresponding activation functions may be respectively tanh and softplus. A final output result of the third neural network model is obtained after sampling.

Step 604. The network device determines a scheduling result based on the K scheduled weights, where the scheduling result indicates a scheduled terminal device.

For example, that the network device determines the scheduling result based on the K scheduled weights may be implemented by taking the following three actions (action):

Action d1: The network device uses, as the scheduling result, an identifier of a terminal device corresponding to a largest scheduled weight in the K scheduled weights.

Action d2: The network device uses, as the scheduling result, an identifier of a terminal device corresponding to a smallest scheduled weight in the K scheduled weights.

Action d3: The network device processes one scheduled weight in the K scheduled weights into a first value, processes the remaining K-1 scheduled weights into second values, and uses, as the scheduling result, a sequence including the first value and the K-1 second values that are obtained through processing, where a terminal device corresponding to the first value in the scheduling result is the scheduled terminal device.

It should be noted that the foregoing Actions d1 to d3 are the same as Actions a1 to a3 in the embodiment shown in FIG. 4. For a specific example, refer to the foregoing related descriptions. Details are not described herein again.

In an optional implementation, before the foregoing step is performed or in a process of performing the foregoing step, a neural network model is trained.

In a specific implementation, a seventh state information set is input into a fourth neural network model to obtain a value (refer to FIG. 7) corresponding to the seventh state information set. The value is used to update model parameters of the third neural network model and the fourth neural network model, a dimension of the seventh state information set is the same as the dimension of the fifth state information set, and the fourth neural network model is determined based on L.

The fourth neural network model may be referred to as a value neural network, a hidden layer of the fourth neural network model may be the same as the hidden layer of the third neural network model, and an activation function of an output layer of the fourth neural network model may be a linear activation function.

For example, that the fourth neural network model is determined based on L may be understood as follows: An input dimension of the fourth neural network model is related to L, that is, a quantity of neurons at an input layer of the fourth neural network model is related to L.

In an implementation, in this application, the input dimension of the fourth neural network model is equal to G, that is, the quantity of neurons at the input layer of the fourth neural network model is G.

In a specific implementation, the value corresponding to the seventh state information set may be understood as value, and that the value is used to update the model parameters of the third neural network model and the fourth neural network model may be specifically as follows: updating the model parameters of the third neural network model and the fourth neural network model based on the value and a reward obtained from an environment.

In the foregoing method, a process of inputting the single seventh state information set into the fourth neural network model to obtain the value is not related to the quantity K of the to-be-scheduled terminal devices, and the fourth neural network model is not related to K either. Therefore, a training process of the neural network model is not related to K either. In this way, the training process may not be affected by the quantity of to-be-scheduled terminal devices, and training complexity is reduced.

In an optional implementation, there may be a plurality of cases in which the seventh state information set is obtained. For example, the seventh state information set may be the same as the fifth state information set, that is, the obtained fifth information state set may be directly used for training. For another example, the seventh state information set may be obtained by processing the fifth state information set and a state information set of a terminal device and a state information set of a system in another training sample. For another example, the seventh state information may be obtained by processing a state information set of a terminal device and a state information set of a system in another training sample.

It should be noted that the data for obtaining the seventh state information set may be considered as a group of data. In the training process, the foregoing process may be executed a plurality of times, that is, a plurality of state information sets similar to the seventh state information set are obtained by using a plurality of groups of data, and a process of inputting a value into the fourth neural network model is repeatedly executed. Each group of data may be related to any quantity of terminal devices, that is, each group of data is decoupled from (not related to) a quantity of terminal devices.

The following uses an example to describe the foregoing scheduling method:

It is assumed that the quantity K of to-be-scheduled terminal devices is equal to 5, the dimension L of the fourth state information set of each to-be-scheduled terminal device is equal to 32, the state information set of the system may include a current performance indicator {average throughput, fairness, packet loss rate} of the system, and the dimension thereof is 1*3. In this case, a dimension of a first state matrix formed by the fourth state information sets of the five to-be-scheduled terminal devices is 5*32, and a dimension of a second state matrix obtained after the first state matrix is averaged is 1*32. In this case, a dimension of a system global state (namely, the foregoing fifth state information set) is 1*35. The system global state is input into the third neural network model, for example, a fully-connected neural network that has two hidden layers and 512 neurons at the hidden layer. An activation function of the hidden layer is ReLU. The third neural network model has two output layers that correspondingly output an average value and a variance, and activation functions of the output layers are respectively tanh and softplus. A finally output dimension is 2*32 that respectively represents an average value and a variance of a weight of state information of a to-be-scheduled terminal device. A weight set whose dimension is 1*32 is obtained after sampling. Then, a dot product operation is performed on the obtained weight set and state sub-vectors in the fourth state information set of each to-be-scheduled terminal device, to obtain a score of each to-be-scheduled terminal device. The to-be-scheduled terminal device is scheduled based on the score. In a training phase, the fourth neural network model may have two hidden layers and 512 neurons at the hidden layer, and finally, an activation function of the output layer may be a linear activation function. In this example, the system global state whose dimension is 1*35 may be input into the fourth neural network model to obtain a value.

In the scheduling method provided in this embodiment of this application, a state information set obtained based on state information sets of all to-be-scheduled terminal devices and the state information set of the system is input into a neural network model, to obtain a result. In other words, in a scheduling process, the neural network model is shared among all the to-be-scheduled terminal devices, and the neural network model may be applied to all the to-be-scheduled terminal devices. Therefore, the neural network model may be decoupled from a quantity of to-be-scheduled terminal devices during scheduling, so that the neural network model can be applied to scenarios in which quantities of to-be-scheduled terminal devices are different, and has good self-adaptability and scalability.

It should be noted that, in the embodiment shown in FIG. 6, when K is equal to 1, that is, when there is only one to-be-scheduled terminal device, the another to-be-scheduled terminal device is the to-be-scheduled terminal device. In this case, the foregoing method may also be performed, and a difference is that the fourth state information set includes only state information of the to-be-scheduled terminal device, and the obtained fifth state information set is only related to the state information of the to-be-scheduled terminal device and the state information set of the system. After the weight set is finally obtained, only one scheduled weight of the to-be-scheduled terminal device is obtained. In other words, the foregoing scheduling method is also fully applicable when K is equal to 1. In this way, the foregoing scheduling method is more independent of the quantity of to-be-scheduled terminal devices, and scheduling compatibility is better.

Certainly, in a specific implementation, when only one scheduled weight is output, a process of further determining a scheduling result based on the scheduled weight may be omitted. This is not limited in this application.

In a possible embodiment, in the scheduling method shown in FIG. 6, in step 601, the network device may obtain an eighth state information set based on the first information state sets (namely, the first state information sets in the embodiment shown in FIG. 4) of the K to-be-scheduled terminal devices and the state information set of the system. A principle of a method for obtaining the eighth state information set is the same as a principle of the method for obtaining the fifth state information set. For details, refer to each other. In this case, a dimension of the obtained eighth state information set may be F+J. Further, in step 602, a quantity of weights in a weight set obtained by inputting the eighth state information set into the third neural network model is the same as F. Then, in a process of performing step 603, the network device performs weighted summation on values of all pieces of state information in an eighth state information set of each to-be-scheduled terminal device in the K to-be-scheduled terminal devices based on the weight set, to obtain a scheduled weight of each to-be-scheduled terminal device. Finally, step 604 is performed. It should be understood that a principle of the foregoing process is the same as a principle of the scheduling method shown in FIG. 6. For details, refer to each other. Details are not described herein again.

It should be noted that the training process in the embodiment shown in FIG. 4 and the training process in the embodiment shown in FIG. 6 are not related to the quantity of to-be-scheduled terminal devices. This improves training flexibility. The training process may be an online training process or an offline training process. For example, the foregoing two training processes may be summarized as the following offline (online) training process:

Step 1. Initialize a policy neural network $\pi_e$ and a value neural network $V_\phi$, where $\theta$ is a to-be-trained coefficient of the policy neural network, and $\phi$ is a to-be-trained coefficient of the value neural network.

Step 2. Obtain state information sets $s_t$ of all to-be-scheduled terminal devices at a moment t, obtain an action $a_t$ based on the policy neural network $\pi_\theta$, and perform scheduling.

Step 3. Obtain state information sets $s_{t+1}$ of all the to-be-scheduled terminal devices at a next moment (a moment t+1), and obtain a reward $r_t$.

Step 4. Store {st, $a_t$, $r_t$, $s_{t+1}$} as a training sample.

Step 5. Repeat steps 2 to 4, accumulate a batch of training samples (of a batch size), and then update the neural network, where update steps are as follows:

An objective function of the policy neural network is $J_\theta = \Sigma_i (R_i - V_\phi(s_i))\log\pi_\theta(a_i|s_i)$, and a loss function of the value neural network is $L_\phi = \Sigma_i(R_i - V_\phi (s_i))^2$, where a reward is $R = r_t + \gamma V(s_{t+1})$, i is a sequence number of the training sample in the batch of data, $\gamma$ is a discount factor, and V () indicates an output of the value neural network, namely, a value.

A gradient g for updating a parameter $\theta$ of the policy neural network and a parameter $\phi$ of the value neural network may be represented as: g = $-\nabla_e J_e + \lambda_v \nabla_\phi L_\phi$ where $\nabla_\theta$ and $\nabla_\phi$ respectively means obtaining partial derivatives of $\theta$ and $\phi$, and $\lambda_v$ is a coefficient used to trade off proportions of a policy and value in gradient update.

In online training (learning), it is common that a quantity of terminal devices in a cell changes. A neural network in conventional reinforcement learning scheduling is related to a dimension of each parameter of a training sample. As a result, online learning cannot be efficiently performed. Therefore, it is necessary to ensure that a plurality of training samples in step 5 correspond to a same quantity of terminal devices. In the technical solutions of this application, because the training sample is further decomposed into a state that is not related to the quantity of terminal devices and is input into the neural network, training samples corresponding to different quantities of terminal devices may be effectively used, that is, the plurality of training samples {$s_t$, $a_t$, $r_t$, $s_{t+1}$} stored in step 5 may be samples generated by the network device in case of different quantities of terminal devices.

In addition, in some extreme scenarios, the network device cannot obtain a training sample, or obtains very few training samples. For conventional reinforcement learning scheduling, training cannot be performed in this scenario. In this case, based on user independence in a training process in the technical solutions of this application, a network device in another cell may share a training sample of the network device, so that the network device can complete training.

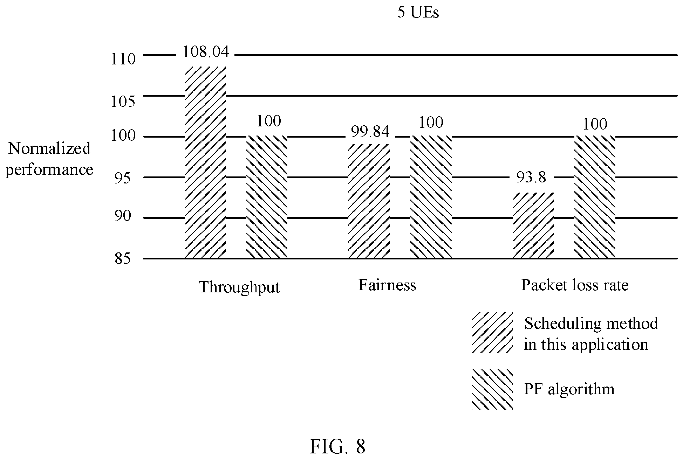

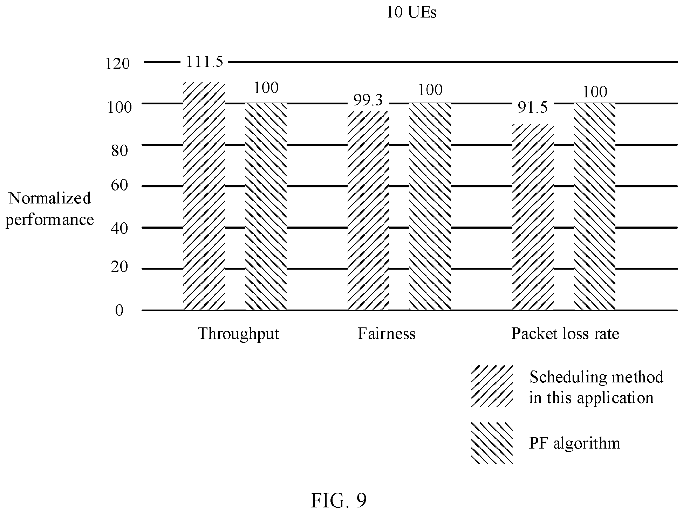

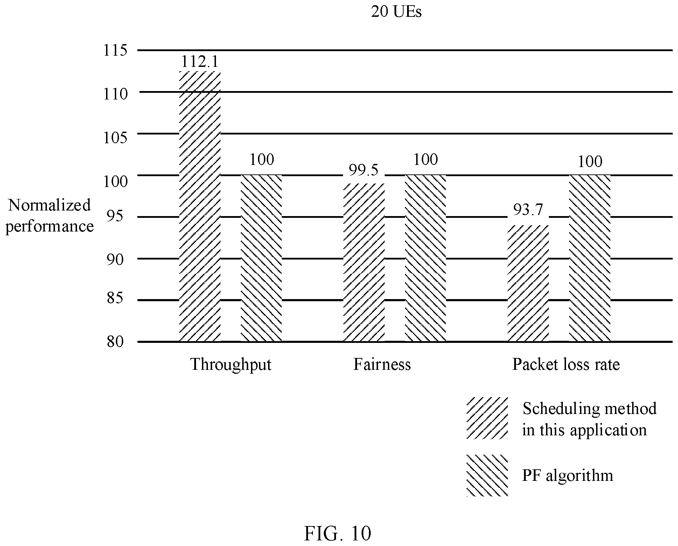

Based on the foregoing embodiments, a proportional fair (proportional fair, PF) algorithm is used as a baseline, a neural network is trained by using a 5-UE configuration, and performance such as a throughput, fairness, and a packet loss rate in case of 5, 10, 20, and 50 UEs is separately verified by using the solutions provided in this application. The performance is separately shown in FIG. 8, FIG. 9, FIG. 10, and FIG. 11. It may be learned from FIG. 8 to FIG. 11 that a training policy existing when 5 UEs are used may also be applicable to 10 UEs, 20 UEs, and 50 UEs, and a stable performance gain can be maintained. Therefore, it may indicate that the scheduling method provided in this application may be used to decouple a deep neural network from a quantity of user equipments in terms of scheduling, to resolve a problem that it is difficult for a deep reinforcement learning scheduling algorithm to self-adapt to the quantity of user equipments.

In the foregoing PF algorithm, a compromise between a throughput and fairness may be well implemented. Therefore, the PF algorithm is widely used. The PF algorithm is used as an example below to describe a scheduling algorithm based on a deterministic model and a deterministic formula. In the PF algorithm, a scheduled user may be selected based on the following formula:

$$k = \underset{i}{\arg\max} \frac{R_i(t)}{T_i(t)},$$

where $R_i(t)$ is an estimated throughput of a user i at a moment t, and depends on a factor such as a channel condition and a buffer status of the user, and $T_i(t)$ is a historical cumulative throughput of the user i at the moment t. It may be learned that $R_i(t)/T(t)$ is a metric that takes a throughput and fairness into consideration. If a current estimated throughput $R_i(t)$ is larger, it indicates that the channel condition of the user is good, sufficient data in a buffer needs to be sent, and therefore the metric value is larger. In addition, if the cumulative throughput $T_i(t)$ is larger, it indicates that an amount of data that has been sent by the user is larger. For fairness, an opportunity of sending the data should be reduced. Therefore, the metric value is smaller. The tradeoff between the throughput and the fairness is implemented by selecting a user with a largest measurement value for scheduling.

However, due to complexity of the communication system, it is impossible to accurately model the system by using a closed-form model and a closed-form formula. Therefore, a formula-based scheduling algorithm such as the PF algorithm cannot ensure optimality of the formula. Therefore, the scheduling algorithm provided in this application is widely used, and has good scalability.

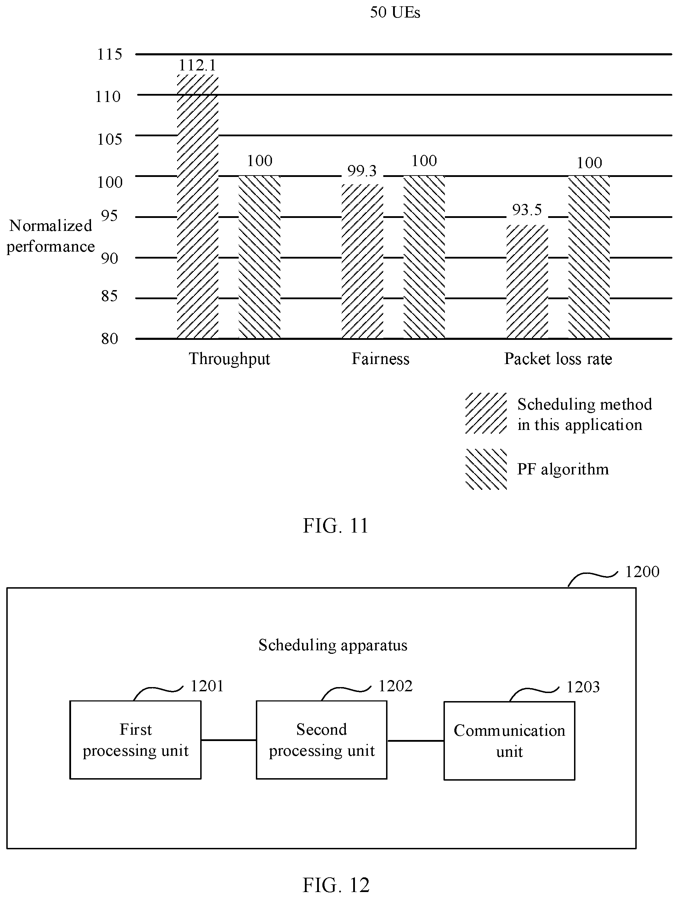

Based on the foregoing embodiments, an embodiment of this application further provides a scheduling apparatus. The scheduling apparatus may be a network device, or may be an apparatus (for example, a chip, a chip system, a chipset, a part of a chip that is used to perform a related method function) in the network device, or may be an apparatus that can be used in combination with the network device. The scheduling apparatus may be applied to the communication system shown in FIG. 2, and is configured to implement the scheduling method shown in FIG. 4 or FIG. 6. In a design, the scheduling apparatus may include modules in a one-to-one correspondence with methods/operations/steps/actions performed by the network device in the foregoing method embodiments. The module may be a hardware circuit, may be software, or may be implemented by combining a hardware circuit and software. For example, as shown in FIG. 12, a scheduling apparatus 1200 may include a first processing unit 1201, a second processing unit 1202, and a communication unit 1203. The first processing unit 1201 and the second processing unit 1202 may be combined into one processing unit, and the processing unit obtained through combination may have functions of both the first processing unit 1201 and the second processing unit 1202. It should be noted that, in this application, a unit may also be referred to as a module or have another name, and the name is not limited in this application.

In an embodiment, when the scheduling apparatus 1200 is configured to perform the operation of the network device in the scheduling method shown in FIG. 4, the following case exists:

The first processing unit 1201 is configured to process first state information sets of K to-be-scheduled terminal devices to obtain second state information sets of the K to-be-scheduled terminal devices, where K is an integer greater than or equal to 1, a second state information set of any to-be-scheduled terminal device includes state information of the any to-be-scheduled terminal device and state association data between the any to-be-scheduled terminal device and another to-be-scheduled terminal device, a dimension of a second state information set of any to-be-scheduled terminal device in the K to-be-scheduled terminal devices is H, and H is an integer greater than or equal to 1. The second processing unit 1202 is configured to: input a second state information set of each to-be-scheduled terminal device into a first neural network model, determine a scheduled weight of each to-be-scheduled terminal device to obtain K scheduled weights, where the first neural network model is determined based on H; and determine a scheduling result based on the K scheduled weights, where the scheduling result indicates a scheduled terminal device. The communication unit 1203 is configured to output the scheduling result.

For example, a first state information set of any to-be-scheduled terminal device includes at least one piece of the following state information: an estimated instantaneous throughput of the terminal device, an average throughput of the terminal device, a buffer size of the terminal device, and packet waiting time of the terminal device.

In a specific implementation, when determining the scheduling result based on the K scheduled weights, the second processing unit 1202 is specifically configured to: use, as the scheduling result, an identifier of a terminal device corresponding to a largest scheduled weight in the K scheduled weights; or use, as the scheduling result, an identifier of a terminal device corresponding to a smallest scheduled weight in the K scheduled weights; or process one scheduled weight in the K scheduled weights into a first value, process the remaining K-1 scheduled weights into second values, and use, as the scheduling result, a sequence including the first value and the K-1 second values that are obtained through processing, where a terminal device corresponding to the first value in the scheduling result is the scheduled terminal device.

In an optional implementation, the second processing unit 1202 is further configured to input a third state information set into a second neural network model to obtain a value corresponding to the third state information set, where the value is used to update model parameters of the first neural network model and the second neural network model, a dimension of the third state information set is H, and the second neural network model is determined based on H.

For example, the third state information set is obtained by the second processing unit 1202 by processing the second state information sets of the K to-be-scheduled terminal devices.

Specifically, when processing the second state information sets of the K to-be-scheduled terminal devices to obtain the third state information set, the second processing unit 1202 is specifically configured to: average each piece of state information in the second state information sets of the K to-be-scheduled terminal devices to obtain the third state information set; or select a maximum value of each piece of state information in the second state information sets of the K to-be-scheduled terminal devices to form the third state information set; or select a minimum value of each piece of state information in the second state information sets of the K to-be-scheduled terminal devices to form the third state information set.

In a possible implementation, that either of the first neural network model and the second neural network model is determined based on H includes: an input dimension of either of the first neural network model and the second neural network model is related to H.

In another embodiment, when the scheduling apparatus 1200 is configured to perform the operation of the network device in the scheduling transmission method shown in FIG. 6, the following case exists:

The first processing unit 1201 is configured to obtain a fifth state information set based on fourth state information sets of K to-be-scheduled terminal devices and a state information set of a system, where K is an integer greater than or equal to 1, a dimension of a first state information set of any to-be-scheduled terminal device in the K to-be-scheduled terminal devices is L, L is an integer greater than or equal to 1, and a fourth state information set of any to-be-scheduled terminal device includes state information of the any to-be-scheduled terminal device and state association data between the any to-be-scheduled terminal device and another to-be-scheduled terminal device. The second processing unit 1202 is configured to: input the fifth state information set into a third neural network model to determine a weight set, where the third neural network model is determined based on H, and a quantity of weights included in the weight set is the same as H; determine a scheduled weight of each to-be-scheduled terminal device in the K to-be-scheduled terminal devices based on the weight set, to obtain K scheduled weights; and determine a scheduling result based on the K scheduled weights, where the scheduling result indicates a scheduled terminal device. The communication unit 1203 is configured to output the scheduling result.

For example, the state information set of the system includes at least one piece of the following state information: an average throughput of the system, fairness of the system, and a packet loss rate of the system.

In a specific implementation, when obtaining the fifth state information set based on the fourth state information sets of the K to-be-scheduled terminal devices and the state information set of the system, the first processing unit 1201 is specifically configured to: process the fourth state information sets of the K to-be-scheduled terminal devices to obtain a sixth state information set, and combine the sixth state information set and the state information set of the system into the fifth state information set.

In an optional implementation, when processing the fourth state information sets of the K to-be-scheduled terminal devices to obtain the sixth state information set, the first processing unit 1201 is specifically configured to: average each piece of state information in the fourth state information sets of the K to-be-scheduled terminal devices to obtain the sixth state information set; or select a maximum value of each piece of state information in the fourth state information sets of the K to-be-scheduled terminal devices to form the sixth state information set; or select a minimum value of each piece of state information in the fourth state information sets of the K to-be-scheduled terminal devices to form the sixth state information set.

For example, the second processing unit 1202 is further configured to input a seventh state information set into a fourth neural network model to obtain a value corresponding to the seventh state information set, where the value is used to update model parameters of the third neural network model and the fourth neural network model, a dimension of the seventh state information set is the same as a dimension of the fifth state information set, and the fourth neural network model is determined based on L.

Optionally, the seventh state information set is the same as the fifth state information set.

In a possible implementation, that either of the third neural network model and the fourth neural network model is determined based on L may include: an input dimension of either of the third neural network model and the fourth neural network model is related to L.

In an optional implementation, when determining the scheduled weight of each to-be-scheduled terminal device in the K to-be-scheduled terminal devices based on the weight set, the second processing unit 1202 is specifically configured to perform weighted summation on values of all pieces of state information in a fourth state information set of each to-be-scheduled terminal device in the K to-be-scheduled terminal devices based on the weight set, to obtain the scheduled weight of each to-be-scheduled terminal device.

For example, when determining the scheduling result based on the K scheduled weights, the second processing unit 1202 is specifically configured to: use, as the scheduling result, an identifier of a terminal device corresponding to a largest scheduled weight in the K scheduled weights; or use, as the scheduling result, an identifier of a terminal device corresponding to a smallest scheduled weight in the K scheduled weights; or process one scheduled weight in the K scheduled weights into a first value, process the remaining K-1 scheduled weights into second values, and use, as the scheduling result, a sequence including the first value and the K-1 second values that are obtained through processing, where a terminal device corresponding to the first value in the scheduling result is the scheduled terminal device.

It should be noted that, in embodiments of this application, division into the units is an example, and is merely a logical function division. In an actual implementation, another division manner may be used. Function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

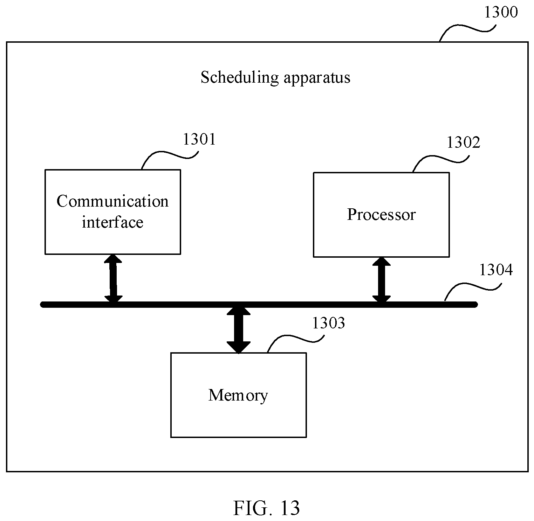

Based on the foregoing embodiments, an embodiment of this application further provides a scheduling apparatus. The scheduling apparatus may be a network device, or may be an apparatus (for example, a chip, a chip system, a chipset, a part of a chip that is used to perform a related method function) in the network device, or may be an apparatus that can be used in combination with the network device. The scheduling apparatus may be a chip system. In this embodiment of this application, the chip system may include a chip, or may include a chip and another discrete component. The scheduling apparatus may be applied to the communication system shown in FIG. 2, and is configured to implement the scheduling method shown in FIG. 4 or FIG. 6. For example, as shown in FIG. 13, a scheduling apparatus 1300 may include at least one processor 1302. Optionally, the scheduling apparatus may further include a communication interface 1301 and/or a memory 1303.

The processor 1302 may be a central processing unit (central processing unit, CPU), a network processor (network processor, NP), a combination of a CPU and an NP, or the like. The processor 1302 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 1302 may implement the foregoing functions by hardware or by hardware executing corresponding software.

In embodiments of this application, the communication interface 1301 may be a transceiver, a circuit, a bus, a module, or a communication interface of another type, and is configured to communicate with another device through a transmission medium. The memory 1303 is coupled to the processor 1302, and is configured to store a program and the like necessary for the scheduling apparatus 1300. For example, the program may include program code, and the program code includes computer operation instructions.

The memory 1303 may include a RAM, and may further include a non-volatile memory (non-volatile memory), for example, at least one magnetic disk storage. The processor 1302 executes an application program stored in the memory 1303 to implement a function of the scheduling apparatus 1300. The coupling in this embodiment of this application may be an indirect coupling or a communication connection between apparatuses, units, or modules in an electrical form, a mechanical form, or another form, and is used for information exchange between the apparatuses, the units, or the modules.

A specific connection medium between the foregoing communication interface 1301, processor 1302, and memory 1302 is not limited in this embodiment of this application. In this embodiment of this application, in FIG. 13, the communication interface 1302, the processor 1301, and the memory 1302 are connected by using a bus 1304. The bus 1304 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 13, but this does not mean that there is only one bus or only one type of bus.

In an embodiment, when the scheduling apparatus 1300 is configured to perform the operation of the network device in the scheduling method shown in FIG. 4, the following case exists:

The processor 1302 is configured to: process first state information sets of K to-be-scheduled terminal devices to obtain second state information sets of the K to-be-scheduled terminal devices, where K is an integer greater than or equal to 1, a second state information set of any to-be-scheduled terminal device includes state information of the any to-be-scheduled terminal device and state association data between the any to-be-scheduled terminal device and another to-be-scheduled terminal device, a dimension of a second state information set of any to-be-scheduled terminal device in the K to-be-scheduled terminal devices is H, and H is an integer greater than or equal to 1; input a second state information set of each to-be-scheduled terminal device into a first neural network model, and determine a scheduled weight of each to-be-scheduled terminal device to obtain K scheduled weights, where the first neural network model is determined based on H; and determine a scheduling result based on the K scheduled weights, where the scheduling result indicates a scheduled terminal device.

For example, a first state information set of any to-be-scheduled terminal device includes at least one piece of the following state information: an estimated instantaneous throughput of the terminal device, an average throughput of the terminal device, a buffer size of the terminal device, and packet waiting time of the terminal device.

In a specific implementation, when determining the scheduling result based on the K scheduled weights, the processor 1302 is specifically configured to: use, as the scheduling result, an identifier of a terminal device corresponding to a largest scheduled weight in the K scheduled weights; or use, as the scheduling result, an identifier of a terminal device corresponding to a smallest scheduled weight in the K scheduled weights; or process one scheduled weight in the K scheduled weights into a first value, process the remaining K-1 scheduled weights into second values, and use, as the scheduling result, a sequence including the first value and the K-1 second values that are obtained through processing, where a terminal device corresponding to the first value in the scheduling result is the scheduled terminal device.

In an optional implementation, the processor 1302 is further configured to input a third state information set into a second neural network model to obtain a value corresponding to the third state information set, where the value is used to update model parameters of the first neural network model and the second neural network model, a dimension of the third state information set is H, and the second neural network model is determined based on H.

For example, the third state information set is obtained by the processor 1302 by processing the second state information sets of the K to-be-scheduled terminal devices.

Specifically, when processing the second state information sets of the K to-be-scheduled terminal devices to obtain the third state information set, the processor 1302 is specifically configured to: average each piece of state information in the second state information sets of the K to-be-scheduled terminal devices to obtain the third state information set; or select a maximum value of each piece of state information in the second state information sets of the K to-be-scheduled terminal devices to form the third state information set; or select a minimum value of each piece of state information in the second state information sets of the K to-be-scheduled terminal devices to form the third state information set.

In a possible implementation, that either of the first neural network model and the second neural network model is determined based on H includes: an input dimension of either of the first neural network model and the second neural network model is related to H.

In another embodiment, when the scheduling apparatus 1300 is configured to perform the operation of the network device in the scheduling transmission method shown in FIG. 6, the following case exists:

The processor 1302 is configured to: obtain a fifth state information set based on fourth state information sets of K to-be-scheduled terminal devices and a state information set of a system, where K is an integer greater than or equal to 1, a dimension of a first state information set of any to-be-scheduled terminal device in the K to-be-scheduled terminal devices is L, L is an integer greater than or equal to 1, and a fourth state information set of any to-be-scheduled terminal device includes state information of the any to-be-scheduled terminal device and state association data between the any to-be-scheduled terminal device and another to-be-scheduled terminal device; input the fifth state information set into a third neural network model to determine a weight set, where the third neural network model is determined based on H, and a quantity of weights included in the weight set is the same as H; determine a scheduled weight of each to-be-scheduled terminal device in the K to-be-scheduled terminal devices based on the weight set, to obtain K scheduled weights; and determine a scheduling result based on the K scheduled weights, where the scheduling result indicates a scheduled terminal device.

For example, the state information set of the system includes at least one piece of the following state information: an average throughput of the system, fairness of the system, and a packet loss rate of the system.

In a specific implementation, when obtaining the fifth state information set based on the fourth state information sets of the K to-be-scheduled terminal devices and the state information set of the system, the processor 1302 is specifically configured to: process the fourth state information sets of the K to-be-scheduled terminal devices to obtain a sixth state information set, and combine the sixth state information set and the state information set of the system into the fifth state information set.

In an optional implementation, when processing the fourth state information sets of the K to-be-scheduled terminal devices to obtain the sixth state information set, the processor 1302 is specifically configured to: average each piece of state information in the fourth state information sets of the K to-be-scheduled terminal devices to obtain the sixth state information set; or select a maximum value of each piece of state information in the fourth state information sets of the K to-be-scheduled terminal devices to form the sixth state information set; or select a minimum value of each piece of state information in the fourth state information sets of the K to-be-scheduled terminal devices to form the sixth state information set.

For example, the processor 1302 is further configured to input a seventh state information set into a fourth neural network model to obtain a value corresponding to the seventh state information set, where the value is used to update model parameters of the third neural network model and the fourth neural network model, a dimension of the seventh state information set is the same as a dimension of the fifth state information set, and the fourth neural network model is determined based on L.

Optionally, the seventh state information set is the same as the fifth state information set.

In a possible implementation, that either of the third neural network model and the fourth neural network model is determined based on L may include: an input dimension of either of the third neural network model and the fourth neural network model is related to L.

In an optional implementation, when determining the scheduled weight of each to-be-scheduled terminal device in the K to-be-scheduled terminal devices based on the weight set, the processor 1302 is specifically configured to perform weighted summation on values of all pieces of state information in a fourth state information set of each to-be-scheduled terminal device in the K to-be-scheduled terminal devices based on the weight set, to obtain the scheduled weight of each to-be-scheduled terminal device.

For example, when determining the scheduling result based on the K scheduled weights, the processor 1302 is specifically configured to: use, as the scheduling result, an identifier of a terminal device corresponding to a largest scheduled weight in the K scheduled weights; or use, as the scheduling result, an identifier of a terminal device corresponding to a smallest scheduled weight in the K scheduled weights; or process one scheduled weight in the K scheduled weights into a first value, process the remaining K-1 scheduled weights into second values, and use, as the scheduling result, a sequence including the first value and the K-1 second values that are obtained through processing, where a terminal device corresponding to the first value in the scheduling result is the scheduled terminal device.

In an embodiment, when the scheduling apparatus 1200 and the scheduling apparatus 1300 are specifically chips or chip systems, the communication unit 1203 and the communication interface 1301 may output or receive information in a form of a baseband signal. For example, when the scheduling apparatus 1200 and the scheduling apparatus 1300 implement a function of the network device, the communication interface 1301 receives a baseband signal that carries information.

In an embodiment, when the scheduling apparatus 1200 and the scheduling apparatus 1300 are specifically devices, the communication interface 1301 may output or receive a radio frequency signal. For example, when the scheduling apparatus 1200 and the scheduling apparatus 1300 implement a function of the network device, the communication interface 1301 receives a radio frequency signal that carries information.

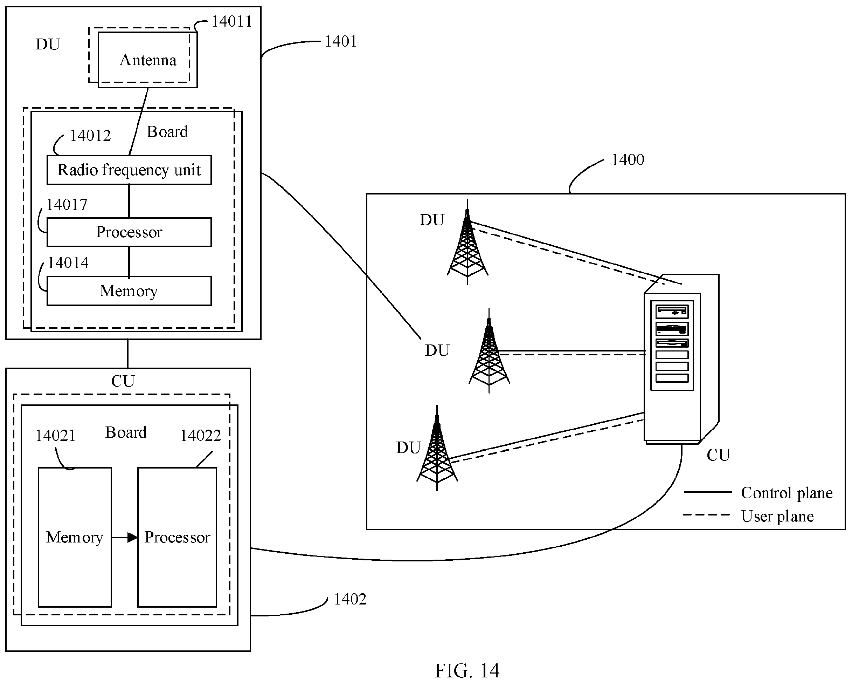

FIG. 14 is a schematic diagram of a structure of a network device according to an embodiment of this application, for example, may be a schematic diagram of a structure of a base station. As shown in FIG. 14, the network may be applied to the communication system shown in FIG. 2, and perform a function of the network device in the method embodiment in FIG. 4 or FIG. 6. A base station 1400 may include one or more distributed units (distributed unit, DU) 1401 and one or more centralized units (centralized unit, CU) 1402. The DU 1401 may include at least one antenna 14011, at least one radio frequency unit 14012, at least one processor 14017, and at least one memory 14014. The DU 1401 is mainly configured to receive and send a radio frequency signal, convert a radio frequency signal and a baseband signal, and perform some baseband processing. The CU 1402 may include at least one processor 14022 and at least one memory 14021. The CU 1402 and the DU 1401 may communicate with each other through an interface. A control plane (Control plane) interface may be Fs-C, for example, F1-C, and a user plane (User Plane) interface may be Fs-U, for example, F1-U.

The CU 1402 is mainly configured to perform baseband processing, control the base station, and the like. The DU 1401 and the CU 1402 may be physically disposed together, or may be physically disposed separately, to be specific, may be on a distributed base station. The CU 1402 is a control center of the base station, may also be referred to as a processing unit, and is mainly configured to complete a baseband processing function. For example, the CU 1402 may be configured to control the base station to perform an operation process related to the network device in the method embodiment in FIG. 4 or FIG. 6.

Specifically, baseband processing of the CU and the DU may be divided based on a protocol layer of a wireless network. For example, functions of a PDCP layer and a layer above the PDCP layer are set on the CU, and functions of protocol layers below the PDCP layer, such as an RLC layer and a MAC layer, are set on the DU. For another example, the CU implements functions of an RRC layer and a PDCP layer, and the DU implements functions of an RLC layer, a MAC layer, and a physical (physical, PHY) layer.

In addition, optionally, the base station 1400 may include one or more radio frequency units (RUs), one or more DUs, and one or more CUs. The DU may include at least one processor 14017 and at least one memory 14014, the RU may include at least one antenna 14011 and at least one radio frequency unit 14012, and the CU may include at least one processor 14022 and at least one memory 14021.

In an example, the CU 1402 may include one or more boards, and a plurality of boards may jointly support a radio access network (for example, a 5G network) of a single access standard, or may separately support radio access networks (such as an LTE network, a 5G network, or another network) of different access standards. The memory 14021 and the processor 14022 may serve one or more boards. In other words, the memory and the processor may be disposed on each board. Alternatively, the plurality of boards may share a same memory and processor. In addition, a necessary circuit may be further disposed on each board. The DU 1401 may include one or more boards, and a plurality of boards may jointly support a radio access network (for example, a 5G network) of a single access standard, or may separately support radio access networks (such as an LTE network, a 5G network, or another network) of different access standards. The memory 14014 and the processor 14017 may serve one or more boards. In other words, the memory and the processor may be disposed on each board. Alternatively, the plurality of boards may share a same memory and processor. In addition, a necessary circuit may be further disposed on each board.

An embodiment of this application further provides a computer-readable storage medium that stores a computer program. When the computer program is executed by a scheduling apparatus, the scheduling apparatus is enabled to implement the foregoing scheduling method. For example, the computer-readable storage medium may be any usable medium accessible to a computer. The following provides an example but imposes no limitation: The computer-readable medium may include a non-transitory computer-readable storage medium, a RAM, a ROM, an EEPROM, a CD-ROM or another compact disc storage, a magnetic disk storage medium or another magnetic storage device, or any other medium that can be used to carry or store expected program code in a form of an instruction or a data structure and that can be accessed by a computer.

An embodiment of this application further provides a computer program product. When the computer program product is executed by a communication apparatus, the communication apparatus is enabled to implement the foregoing scheduling method. For example, the computer program product may be a computer program product that includes a non-transitory computer-readable medium.

In conclusion, this application provides a scheduling method and apparatus. In a scheduling process, a neural network model may be shared among all to-be-scheduled terminal devices, and the neural network model may be applied to all the to-be-scheduled terminal devices. Therefore, the neural network model may be decoupled from a quantity of to-be-scheduled terminal devices during scheduling, so that the neural network model can be applied to scenarios in which quantities of to-be-scheduled terminal devices are different, and has good self-adaptability and scalability.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

## Claims

1. A scheduling method carried out by a network element, **characterised in that** it comprises the following steps:

    obtaining (601) a fifth state information set based on fourth state information sets of K to-be-scheduled terminal devices and a state information set of a system, wherein K is an integer greater than or equal to 1, a dimension of a fourth state information set of any to-be-scheduled terminal device in the K to-be-scheduled terminal devices is L, L is an integer greater than or equal to 1, and a fourth state information set of any to-be-scheduled terminal device comprises state information of the any to-be-scheduled terminal device and state association data between the any to-be-scheduled terminal device and another to-be-scheduled terminal device; inputting (602) the fifth state information set into a third neural network model to determine a weight set, wherein the third neural network model is determined based on L, and a quantity of weights comprised in the weight set is the same as L; determining (603) a scheduled weight of each to-be-scheduled terminal device in the K to-be-scheduled terminal devices based on the weight set, to obtain K scheduled weights; and determining (604) a scheduling result based on the K scheduled weights, wherein the scheduling result indicates a scheduled terminal device.

2. The method according to claim 1, wherein the state information set of the system comprises at least one piece of the following state information: an average throughput of the system, fairness of the system, and a packet loss rate of the system.

3. The method according to claim 1 or 2, wherein the obtaining (601) a fifth state information set based on fourth state information sets of K to-be-scheduled terminal devices and a state information set of a system comprises:

   processing the fourth state information sets of the K to-be-scheduled terminal devices to obtain a sixth state information set; and combining the sixth state information set and the state information set of the system into the fifth state information set.

4. The method according to claim 3, wherein the processing the fourth state information sets of the K to-be-scheduled terminal devices to obtain a sixth state information set comprises:

   averaging each piece of state information in the fourth state information sets of the K to-be-scheduled terminal devices to obtain the sixth state information set; or selecting a maximum value of each piece of state information in the fourth state information sets of the K to-be-scheduled terminal devices to form the sixth state information set; or selecting a minimum value of each piece of state information in the fourth state information sets of the K to-be-scheduled terminal devices to form the sixth state information set.

5. The method according to any one of claims 1 to 4, wherein the method further comprises:

inputting a seventh state information set into a fourth neural network model to obtain a value corresponding to the seventh state information set, wherein the value is used to update model parameters of the third neural network model and the fourth neural network model, a dimension of the seventh state information set is the same as a dimension of the fifth state information set, and the fourth neural network model is determined based on L.

6. The method according to claim 5, wherein the seventh state information set is the same as the fifth state information set.

7. The method according to claim 1, 5, or 6, wherein that either of the third neural network model and the fourth neural network model is determined based on L comprises:
an input dimension of either of the third neural network model and the fourth neural network model is related to L.

8. The method according to any one of claims 1 to 7, wherein the determining (603) a scheduled weight of each to-be-scheduled terminal device in the K to-be-scheduled terminal devices based on the weight set comprises:
performing weighted summation on values of all pieces of state information in a fourth state information set of each to-be-scheduled terminal device in the K to-be-scheduled terminal devices based on the weight set, to obtain the scheduled weight of each to-be-scheduled terminal device.

9. The method according to any one of claims 1 to 8, wherein the determining (604) a scheduling result based on the K scheduled weights comprises:

   using, as the scheduling result, an identifier of a terminal device corresponding to a largest scheduled weight in the K scheduled weights; or using, as the scheduling result, an identifier of a terminal device corresponding to a smallest scheduled weight in the K scheduled weights; or processing one scheduled weight in the K scheduled weights into a first value, processing the remaining K-1 scheduled weights into second values, and using, as the scheduling result, a sequence consisting of the first value and the K-1 second values that are obtained through processing, wherein a terminal device corresponding to the first value in the scheduling result is the scheduled terminal device.

10. A scheduling apparatus, comprising a processor, wherein when the processor executes a computer program or instructions in a memory, the method according to any one of claims 1 to 9 is performed, and the scheduling apparatus is connected to the memory, or the scheduling apparatus comprises the memory.

11. A computer-readable storage medium, comprising a program or instructions, wherein when the program or the instructions is/are run on a computer, the computer is enabled to perform the method according to any one of claims 1 to 9.


## Patentansprüche

1. Planungsverfahren, das über ein Netzwerkelement ausgeführt wird,
**dadurch gekennzeichnet, dass** es die folgenden Schritte umfasst:

 Erhalten (601) eines fünften Zustandsinformationssatzes basierend auf vierten Zustandsinformationssätzen von K zu planenden Endgeräten und einem Zustandsinformationssatz eines Systems, wobei K eine ganze Zahl größer als oder
 gleich 1 ist, eine Dimension eines vierten Zustandsinformationssatzes eines beliebigen zu planenden Endgeräts in den K zu planenden Endgeräten L ist, L eine ganze Zahl größer als oder gleich 1 ist und ein vierter Zustandsinformationssatz eines beliebigen zu planenden Endgeräts Zustandsinformationen des beliebigen zu planenden Endgeräts und Zustandszuordnungsdaten zwischen dem beliebigen zu planenden Endgerät und einem anderen zu planenden Endgerät umfasst;
 Eingeben (602) des fünften Zustandsinformationssatzes in ein drittes neuronales Netzwerkmodell, um einen Gewichtungssatz zu bestimmen, wobei das dritte neuronale Netzwerkmodell basierend auf L bestimmt wird und eine in dem Gewichtungssatz umfasste Menge an Gewichtungen dieselbe wie L ist;
 Bestimmen (603) einer geplanten Gewichtung jedes zu planenden Endgeräts in den K zu planenden Endgeräten basierend auf dem Gewichtungssatz, um K geplante Gewichtungen zu erhalten; und
 Bestimmen (604) eines Planungsergebnisses basierend auf den K geplanten Gewichtungen, wobei das Planungsergebnis ein geplantes Endgerät angibt.

2. Verfahren nach Anspruch 1, wobei der Zustandsinformationssatz des Systems mindestens eine Information der folgenden Zustandsinformationen umfasst: einen durchschnittlichen Durchsatz des Systems, eine Fairness des Systems und eine Paketverlustrate des Systems.

3. Verfahren nach Anspruch 1 oder 2, wobei das Erhalten (601) eines fünften Zustandsinformationssatzes basierend auf vierten Zustandsinformationssätzen von K zu planenden Endgeräten und einem Zustandsinformationssatz eines Systems umfasst:

 Verarbeiten der vierten Zustandsinformationssätze der K zu planenden Endgeräte, um einen sechsten Zustandsinformationssatz zu erhalten; und
 Kombinieren des sechsten Zustandsinformationssatzes und des Zustandsinformationssatzes des Systems zu dem fünften Zustandsinformationssatz.

4. Verfahren nach Anspruch 3, wobei das Verarbeiten der vierten Zustandsinformationssätze der K zu planenden Endgeräte, um einen sechsten Zustandsinformationssatz zu erhalten, umfasst:

 Mitteln jeder Zustandsinformation in den vierten Zustandsinformationssätzen der K zu planenden Endgeräte, um den sechsten Zustandsinformationssatz zu erhalten; oder
 Auswählen eines Maximalwerts jeder Zustandsinformation in den vierten Zustandsinformationssätzen der K zu planenden Endgeräte, um den sechsten Zustandsinformationssatz auszubilden; oder
 Auswählen eines Minimalwerts jeder Zustandsinformation in den vierten Zustandsinformationssätzen der K zu planenden Endgeräte, um den sechsten Zustandsinformationssatz auszubilden.

5. Verfahren nach einem der Ansprüche 1 bis 4, wobei das Verfahren ferner umfasst:
Eingeben eines siebten Zustandsinformationssatzes in ein viertes neuronales Netzwerkmodell, um einen Wert zu erhalten, der dem siebten Zustandsinformationssatz entspricht, wobei der Wert verwendet wird, um Modellparameter des dritten neuronalen Netzwerkmodells und des vierten neuronalen Netzwerkmodells zu aktualisieren, eine Dimension des siebten Zustandsinformationssatzes dieselbe wie eine Dimension des fünften Zustandsinformationssatzes ist und das vierte neuronale Netzwerkmodell basierend auf L bestimmt wird.

6. Verfahren nach Anspruch 5, wobei der siebte Zustandsinformationssatz derselbe wie der fünfte Zustandsinformationssatz ist.

7. Verfahren nach Anspruch 1, 5 oder 6, wobei, dass entweder das dritte neuronale Netzwerkmodell oder das vierte neuronale Netzwerkmodell basierend auf L bestimmt wird, umfasst:
eine Eingabedimension entweder des dritten neuronalen Netzwerkmodells oder des vierten neuronalen Netzwerkmodells ist mit L verknüpft.

8. Verfahren nach einem der Ansprüche 1 bis 7, wobei das Bestimmen (603) einer geplanten Gewichtung jedes zu planenden Endgeräts in den K zu planenden Endgeräten basierend auf dem Gewichtungssatz umfasst:
Durchführen einer gewichteten Summierung von Werten aller Zustandsinformationen in einem vierten Zustandsinformationssatz jedes zu planenden Endgeräts in den K zu planenden Endgeräten basierend auf dem Gewichtungssatz, um die geplante Gewichtung jedes zu planenden Endgeräts zu erhalten.

9. Verfahren nach einem der Ansprüche 1 bis 8, wobei das Bestimmen (604) eines Planungsergebnisses basierend auf den K geplanten Gewichtungen umfasst:
Verwenden, als das Planungsergebnis, einer Kennung eines Endgeräts, die einer größten geplanten Gewichtung in den K geplanten Gewichtungen entspricht; oder Verwenden, als das Planungsergebnis, einer Kennung eines Endgeräts, die einer kleinsten geplanten Gewichtung in den K geplanten Gewichtungen entspricht; oder Verarbeiten einer geplanten Gewichtung in den K geplanten Gewichtungen zu einem ersten Wert, Verarbeiten der verbleibenden K-1 geplanten Gewichtungen zu zweiten Werten und Verwenden, als das Planungsergebnis, einer Sequenz, die aus dem ersten Wert und den K-1 zweiten Werten besteht, die durch das Verarbeiten erhalten werden, wobei ein Endgerät, das dem ersten Wert in dem Planungsergebnis entspricht, das geplante Endgerät ist.

10. Planungseinrichtung, die einen Prozessor umfasst, wobei, wenn der Prozessor ein Computerprogramm oder Anweisungen in einem Speicher verrichtet, das Verfahren nach einem der Ansprüche 1 bis 9 durchgeführt wird und die Planungseinrichtung mit dem Speicher verbunden ist oder die Planungseinrichtung den Speicher umfasst.

11. Computerlesbares Speicherungsmedium, das ein Programm oder Anweisungen umfasst, wobei, wenn das Programm oder die Anweisungen auf einem Computer abläuft/ablaufen, der Computer aktiviert wird, um das Verfahren nach einem der Ansprüche 1 bis 9 durchzuführen.

**Revendications**

1. Procédé de programmation exécuté par un élément de réseau, **caractérisé en ce qu'**il comprend les étapes suivantes consistant à :

obtenir (601) un cinquième ensemble d'informations d'état sur la base de quatrièmes ensembles d'informations d'état de K dispositifs terminaux à programmer et d'un ensemble d'informations d'état d'un système, dans lequel K est un nombre entier supérieur ou égal à 1, une dimension d'un quatrième ensemble d'informations d'état d'un quelconque dispositif terminal à programmer dans les K dispositifs terminaux à programmer est L, L est un nombre entier supérieur ou égal à 1, et un quatrième ensemble d'informations d'état d'un quelconque dispositif terminal à programmer comprend des informations d'état du quelconque dispositif terminal à programmer et des données d'association d'état entre le quelconque dispositif terminal à programmer et un autre dispositif terminal à programmer ;
introduire (602) le cinquième ensemble d'informations d'état dans un troisième modèle de réseau neuronal afin de déterminer un ensemble de pondérations, dans lequel le troisième modèle de réseau neuronal est déterminé sur la base de L, et une quantité de pondérations comprise dans l'ensemble de pondérations est la même que L ;
déterminer (603) une pondération programmée pour chaque dispositif terminal à programmer dans les K dispositifs terminaux à programmer, sur la base de l'ensemble de pondérations, afin d'obtenir K pondérations programmées ; et
déterminer (604) un résultat de programmation sur la base des K pondérations programmées, dans lequel le résultat de programmation indique un dispositif terminal programmé.

2. Procédé selon la revendication 1, dans lequel l'ensemble d'informations d'état du système comprend au moins un élément d'informations parmi les informations d'état suivantes : un débit moyen du système, une équité du système et un taux de perte de paquets du système.

3. Procédé selon la revendication 1 ou 2, dans lequel l'obtention (601) d'un cinquième ensemble d'informations d'état sur la base de quatrièmes ensembles d'informations d'état de K dispositifs terminaux à programmer et d'un ensemble d'informations d'état d'un système comprend :

le traitement des quatrièmes ensembles d'informations d'état des K dispositifs terminaux à programmer pour obtenir un sixième ensemble d'informations d'état ; et
la combinaison du sixième ensemble d'informations d'état et de l'ensemble d'informations d'état du système dans le cinquième ensemble d'informations d'état.

4. Procédé selon la revendication 3, dans lequel le traitement des quatrièmes ensembles d'informations d'état des K dispositifs terminaux à programmer pour obtenir un sixième ensemble d'informations d'état comprend :

le calcul de la moyenne de chaque élément d'informations parmi les information d'état dans les quatrièmes ensembles d'informations d'état des K dispositifs terminaux à programmer pour obtenir le sixième ensemble d'informations d'état ; ou
la sélection d'une valeur maximale de chaque élément d'informations parmi les information d'état dans les quatrièmes ensembles d'informations d'état des K dispositifs terminaux à programmer pour former le sixième ensemble d'informations d'état ; ou
la sélection d'une valeur minimale de chaque élément d'informations parmi les information d'état dans les quatrièmes ensembles d'informations d'état des K dispositifs terminaux à programmer pour former le sixième ensemble d'informations d'état.

5. Procédé selon l'une quelconque des revendications 1 à 4, dans lequel le procédé comprend en outre :
l'introduction d'un septième ensemble d'informations d'état dans un quatrième modèle de réseau neuronal pour obtenir une valeur correspondant au septième ensemble d'informations d'état, dans lequel la valeur est utilisée pour mettre à jour des paramètres de modèle du troisième modèle de réseau neuronal et du quatrième modèle de réseau neuronal, une dimension du septième ensemble d'informations d'état est la même qu'une dimension du cinquième ensemble d'informations d'état, et le quatrième modèle de réseau neuronal est déterminé sur la base de L.

6. Procédé selon la revendication 5, dans lequel le septième ensemble d'informations d'état est le même que le cinquième ensemble d'informations d'état.

7. Procédé selon la revendication 1, 5 ou 6, dans lequel l'un ou l'autre du troisième modèle de réseau neuronal et du quatrième modèle de réseau neuronal est déterminé sur la base de L comprend :
une dimension introduite de l'un ou l'autre du troisième modèle de réseau neuronal et du quatrième modèle de réseau neuronal est liée à L.

8. Procédé selon l'une quelconque des revendications 1 à 7, dans lequel la détermination (603) d'une pondération programmée pour chaque dispositif terminal à programmer dans les K dispositifs terminaux à programmer sur la base de l'ensemble de pondérations comprend :
la réalisation d'une somme pondérée de valeurs de tous éléments d'informations parmi les informations d'état dans un quatrième ensemble d'informations d'état de chaque dispositif terminal à programmer dans les K dispositifs terminaux à programmer, sur la base de l'ensemble de pondérations, afin d'obtenir la pondération programmée de chaque dispositif terminal à programmer.

9. Procédé selon l'une quelconque des revendications 1 à 8, dans lequel la détermination (604) d'un résultat de programmation sur la base des K pondérations programmées comprend :

l'utilisation, en tant que résultat de programmation, d'un identifiant d'un dispositif terminal correspondant à une pondération programmée la plus élevée parmi les K pondérations programmées ; ou
l'utilisation, en tant que résultat de programmation, d'un identifiant d'un dispositif terminal correspondant à une pondération programmée la plus faible parmi les K pondérations programmées ; ou
le traitement d'une pondération programmée dans les K pondérations programmées en une première valeur, le traitement des K-1 pondérations programmées restantes en secondes valeurs, et l'utilisation, en tant que résultat de programmation, d'une séquence constituée de la première valeur et des K-1 secondes valeurs obtenues par le traitement,
dans lequel un dispositif terminal correspondant à la première valeur dans le résultat de programmation est le dispositif terminal programmé.

10. Appareil de programmation, comprenant un processeur, dans lequel, lorsque le processeur exécute un programme informations ou des instructions dans une mémoire, le procédé selon l'une quelconque des revendications 1 à 9 est réalisé, et l'appareil de programmation est connecté à la mémoire, ou l'appareil de programmation comprend la mémoire.

11. Support de stockage lisible par ordinateur, comprenant un programme ou des instructions, dans lequel, lorsque le programme est exécuté ou lorsque les instructions sont exécutées sur un ordinateur, l'ordinateur est en mesure de réaliser le procédé selon l'une quelconque des revendications 1 à 9.

FIG. 1

Network device

Terminal device 1        Terminal device 2

FIG. 2

FIG. 3

401

A network device processes first state information sets of K to-be-scheduled terminal devices to obtain second state information sets of the K to-be-scheduled terminal devices

402

The network device inputs a second state information set of each to-be-scheduled terminal device into a first neural network model, and determines a scheduled weight of each to-be-scheduled terminal device to obtain K scheduled weights

403

The network device determines a scheduling result based on the K scheduled weights, where the scheduling result indicates a scheduled terminal device

FIG. 4

FIG. 5

A network device obtains a fifth state information set based on fourth state information sets of K to-be-scheduled terminal devices and a state information set of a system

601

The network device inputs the fifth state information set into a third neural network model to determine a weight set

602

The network device determines a scheduled weight of each to-be-scheduled terminal device in the K to-be-scheduled terminal devices based on the weight set, to obtain K scheduled weights

603

The network device determines a scheduling result based on the K scheduled weights, where the scheduling result indicates a scheduled terminal device

604

FIG. 6

FIG. 7

30

5 UEs

FIG. 8

10 UEs

FIG. 9

20 UEs

FIG. 10

50 UEs

FIG. 11

FIG. 12

1300

Scheduling apparatus

1301

Communication interface

1302

Processor

1304

1303

Memory

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109982434 A